(19) Europäisches Patentamt
European Patent Office
Office européen des brevets

(11) **EP 3 728 535 B1**

(12) **EUROPEAN PATENT SPECIFICATION**

(45) Date of publication and mention of the grant of the patent:
**25.10.2023 Bulletin 2023/43**

(21) Application number: **18811843.4**

(22) Date of filing: **07.12.2018**

(51) International Patent Classification (IPC):
***C11D 1/66*** *(2006.01)* ***C11D 3/386*** *(2006.01)*
***C11D 11/00*** *(2006.01)*

(52) Cooperative Patent Classification (CPC):
**C11D 1/662; C11D 3/38627; C11D 11/0017**

(86) International application number:
**PCT/EP2018/083917**

(87) International publication number:
**WO 2019/121057 (27.06.2019 Gazette 2019/26)**

# (54) LAUNDRY FORMULATION FOR REMOVING FATTY COMPOUNDS HAVING A MELTING TEMPERATURE > 30°C DEPOSITED ON TEXTILES

WÄSCHEFORMULIERUNG ZUR ENTFERNUNG VON FETTVERBINDUNGEN MIT EINER SCHMELZTEMPERATUR > 30°C AUF TEXTILIEN

FORMULATION DE LESSIVE PERMETTANT D'ÉLIMINER DES COMPOSÉS GRAS PRÉSENTANT UNE TEMPÉRATURE DE FUSION > 30 °C DÉPOSÉ SUR DES TEXTILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2017 EP 17208934**

(43) Date of publication of application:
**28.10.2020 Bulletin 2020/44**

(73) Proprietor: **BASF SE**
**67056 Ludwigshafen am Rhein (DE)**

(72) Inventors:
- **BAUER, Frederic**
  **67056 Ludwigshafen (DE)**
- **ESPER, Claudia**
  **67056 Ludwigshafen (DE)**
- **SPANGENBERG, Oliver**
  **67056 Ludwigshafen (DE)**

(74) Representative: **BASF IP Association**
**BASF SE**
**GBI-C006**
**67056 Ludwigshafen (DE)**

(56) References cited:
**WO-A1-97/32959**
**WO-A1-97/43377**
**WO-A1-98/45396**
**WO-A1-2011/078949**
**DE-A1- 4 315 854**
**DE-A1- 4 418 487**
**US-A1- 2009 281 010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 728 535 B1

## Description

The present invention refers to a liquid laundry formulations for laundering temperatures ≤ 30°C comprising at least one of the general formula (I) and at least one type of lipase, the use of said composition to remove fatty deposits comprising fatty compounds having a melting temperature > 30°C at laundering temperatures ≤ 30°C.

The term "laundering" relates to both household laundering and industrial laundering and means the process of treating textiles with an aqueous solution containing a laundry formulation. The laundering process may be carried out by using technical devices such as a household or an industrial washing machine. Alternatively, the laundering process may be done by hand.

The term "textile" means any textile material including yarns (thread made of natural or synthetic fibers used for knitting or weaving), yarn intermediates, fibers, non-woven materials, natural materials, synthetic materials, as well as fabrics (a textile made by weaving, knitting or felting fibers) made of these materials such as garments (any article of clothing made of textile), cloths and other articles.

The term "fibers" includes natural fibers, synthetic fibers, and mixtures thereof. Examples of natural fibers are of plant (such as flax, jute and cotton) or animal origin, comprising proteins like collagen, keratin and fibroin (e.g. silk, sheep wool, angora, mohair, cashmere). Examples for fibers of synthetic origin are polyurethane fibers such as Spandex® or Lycra®, polyester fibers, polyolefins such as elastofin, or polyamide fibers such as nylon. Fibers may be single fibers or parts of textiles such as knitwear, wovens, or nonwovens. Laundry formulations usually comprise a great variety of known compounds such as builders, optical brighteners, dispersants, enzymes, perfumes, surfactants (anionic, nonionic, cationic and/or amphotheric), soaps, silicon based defoamers, bleaching agents, colorants, dye transfer inhibitors, complexing agents, bleaching activators, preservatives etc., which are formulated such that they are effective against the broadest possible spectrum of soiling and/or stains deposited on a soiled textile. Industrial fats can be sub-classified as fat, grease or oil depending on the melting temperature. Oil is usually liquid at room temperature. Grease has a higher viscosity than oil at room temperature and be called pasty. The removal of oily and greasy stains deposited on textiles, due to the relatively low melting temperature of oil and grease, is supported by laundering temperatures ≥ 30°C. Fatty deposits comprising fatty compounds having a melting temperature > 30°C, means fats remaining solid at temperatures ≤ 30°C. Removing such fatty compounds deposited on textiles at laundering temperatures ≤ 30°C remains a challenge.

WO201178949 teaches sugar based surfactants having a long-chain length being more effective than short and branched-chain sugar based surfactants.

DE4315854 describes APGs as general formulation ingredient in the context of lipases and exemplified $C_{12/14}$ alkylglycoside wherein R being $C_{12/14}$ is usually linear. Accordingly, it is an object of the present invention to provide a laundry formulation which is effective in removing fatty stains which remain solid at temperatures ≤ 30°C deposited on textiles at laundering temperatures of ≤ 30°C.

The problem was solved by providing a laundry formulation comprising component (a): at least one compound of the general formula (I)

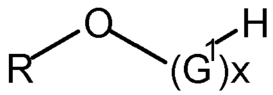

(I)

wherein the variables in general formula (I) are as follows:

R is unsubstituted branched $C_8$-$C_{18}$ alkyl,
$G^1$ is ketose residues and/or aldose residues, wherein ketose and/or aldose residues have 5 or 6 carbon atoms;
x is in the range of from 1 to 10 and refers to average values;
and
component (b): at least one lipase.

Said laundry formulation is characterized in R in general formula (I) being branched $C_{13}$ alkyl, and $G^1$ in general formula (I) being selected from xylose, arabinose, glucose, and mixtures thereof.

At least one lipase comprised in component (b) in one embodiment is selected from fungal triacylglycerol lipases (EC class 3.1.1.3).

The invention provides the use of components (a) and (b) to replace at least one compound of the general formulae (IIa) and (IIb) at least partly in lipase containing laundry formulations, wherein general formulae (IIa) and (IIb) are:

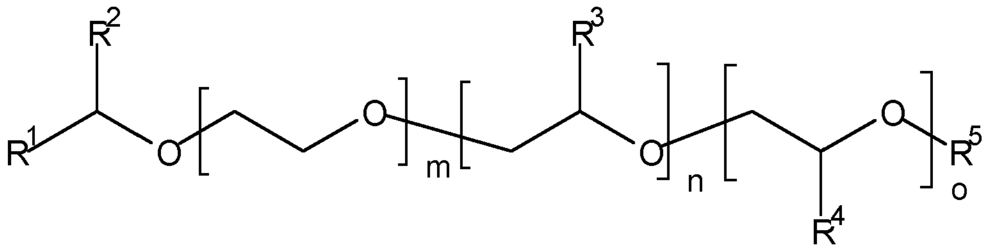

(IIa)

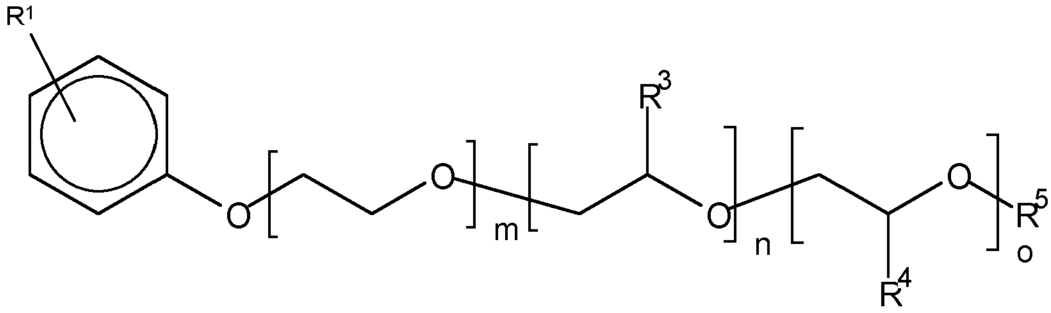

(IIb)

wherein the variables of the general formulae (IIa) and (IIb) are defined as follows:

$R^1$ is selected from $C_6$-$C_{23}$ alkyl and $C_2$-$C_{23}$ alkenyl, wherein alkyl and/or alkenyl are linear or branched
$R^2$ is selected from H, $C_1$-$C_{20}$ alkyl and $C_2$-$C_{20}$ alkenyl, wherein alkyl and/or alkenyl are linear or branched.
$R^3$ and $R^4$, each independently selected from $C_1$-$C_{16}$ alkyl, wherein alkyl is linear or branched; examples are methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, isodecyl.
$R^5$ is selected from H and $C_1$-$C_{18}$ alkyl, wherein alkyl is linear or branched.
m is in the range of zero to 80; n is in the range of zero to 10; o is in the range of zero to 50. The sum of m, n and o is in the range of 5 to 100; and
wherein the replacement results in increased degreasing performance at a laundering temperature ≤ 30°C.

The compound of general formula (IIa) may be selected from those wherein m is not more than 7; n and o is 0, $R^1$ is $C_{12}$-$C_{14}$, $R^5$ is H. In one embodiment, a mixture of compounds of general formula (IIa) is replaced, wherein one of said non-ionic surfactants may be characterized in $R^1$ being $C_{12}$, $R^5$ being H, m is 7, n and o = 0, and the other surfactant may be characterized in $R^1$ being $C_{14}$, $R^5$ being H, m being 7, n and o = 0.

The invention provides the use of at least one compound of the general formula (I) to improve the degreasing performance of laundry formulations comprising at least one lipase on textiles at laundering temperatures ≤ 30°C. The degreasing performance towards fatty deposits with a melting temperature > 30°C may be increased.

The invention provides the use of a surfactant mixture consisting of component (a) and at least one non-ionic surfactant of the general formulae (IIa) and (IIb) to increase the degreasing performance of lipase containing laundry formulations at a laundering temperature ≤ 30°C. At least one non-ionic surfactant of general formula (IIa) may be selected from those wherein m is not more than 7; n and o is 0, $R^1$ is $C_{12}$-$C_{14}$, $R^5$ is H. In one embodiment, the surfactant mixture consists of component (a) and at least two non-ionic surfactants of the general formulae (IIa), wherein one of said non-ionic surfactants may be characterized in $R^1$ being $C_{12}$, $R^5$ being H, m is 7, n and o = 0, and the other surfactant may be characterized in $R^1$ being $C_{14}$, $R^5$ being H, m being 7, n and o = 0. The lipase containing laundry formulation may comprise at least one fungal triacylglycerol lipase.

The invention provides the use of at least one fungal triacylglycerol lipase (EC class 3.1.1.3), to improve degreasing performance at laundering temperatures ≤ 30°C of laundry formulations comprising at least one compound of the general formula (I).

The invention provides a method of removing fatty deposits comprising fatty compounds having a melting temperature > 30°C from textiles, comprising the steps of contacting at least one fatty compound having a melting temperature > 30°C deposited on textiles with a laundry formulation of the invention, wherein contacting occurs at temperatures ≤ 30°C.

The invention provides the use of component (a) and component (b) to solubilize and/or dissolve and/or disperse solid fatty compounds at temperatures ≤ 30°C.

The invention provides a method to reduce redeposition of fatty compounds onto textile during laundering at temperatures ≤ 30°C comprising the steps of contacting at least one fatty compound having a melting temperature > 30°C available in the wash liquor with a laundry formulation of the invention, wherein contacting occurs at temperatures ≤ 30°C.

The invention provides a method of cleaning textiles comprising the steps of contacting a fatty stain deposited on a textile with a laundry formulation of the invention at laundering temperatures ≤ 30°C. The method of cleaning may involve the use of a washing machine.

**Detailed description**

The invention provides a liquid laundry formulation comprising at least component (a): at least one compound of the general formula (I)

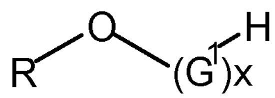

(I)

wherein the variables in general formula (I) are as follows:

R is unsubstituted branched $C_{13}$ alkyl,
$G^1$ is selected from xylose, arabinose, glucose, and mixture thereof;
x is in the range of from 1 to 10 and refers to average values;
and

component (b): at least one lipase selected from fungal triacylglycerol lipase (EC class 3.1.1.3).

**Component (a):**

Component (a) comprises at least one compound of the general formula (I)

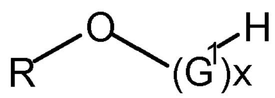

(I)

wherein the variables in general formula (I) are as follows:

R is unsubstituted branched $C_{13}$ alkyl,
$G^1$ is selected from xylose, arabinose, glucose, and mixture thereof;
x is in the range of from 1 to 10 and refers to average values.

Component (a) may comprise two or more different compounds according to formula (I), wherein the two or more compounds according to formula (I) may differ in R and/or $G^1$ and/or x. In one embodiment, at least one compound of the general formula (I) is prepared by Fischer glycosidation, meaning that an alcohol and an aldose or ketose are reacted in the presence of an acidic catalyst. The alcohol used for preparation of the non-ionic surfactant according to general formula (I) by Fischer glycosidation may be $C_{13}$ alcohol, the alcohol being unsubstituted and branched.

The branched alcohol to be used in the Fischer glycosidation process to prepare the non-ionic surfactant of the general formula (I) as described herein, may be itself prepared by a hydroformylation and hydrogenation process. For this purpose, butenes may oligomerized over a nickel-containing heterogeneous catalyst. Depending on the process conditions selected, different relative amounts of butene dimers, trimers and higher oligomers will be obtained. Depending on the amount of iso-butene present in the butane fraction, the alcohol product will have a certain degree of branching.

In one embodiment, the branched alcohol used for preparation of the non-ionic surfactant according to general formula (I) by Fischer glycosidation is a $C_{13}$-alcohol mixture which is prepared by a process as disclosed in WO 01/36356 comprising the steps of

a) bringing a butene-containing $C_4$-hydrocarbon stream containing less than 5% by weight, based on the butene fraction, of isobutene into contact with a nickel-containing heterogeneous catalyst at elevated temperature,

b) isolating a $C_{12}$-olefin fraction from the reaction mixture,

c) hydroformylating the $C_{12}$-olefin fraction by reaction with carbon monoxide and hydrogen in the presence of a cobalt catalyst and

d) hydrogenating the product from c).

Correspondingly, R in the general formula (I) as described herein may be essentially $C_{13}$ alkyl which is unsubstituted branched.

"Essentially" in this contexts means, that unsubstituted branched $C_{13}$ alkyl polygylcoside arises from the Fischer glycosidation with unsubstituted branched $C_{13}$ alcohol which may be prepared as described above and which may contain impurities due to the hydroformylation and hydrogenation process. Said impurities may be present in the unsubstituted branched $C_{13}$ alcohol in amounts ≤5%, ≤3% or ≤1 %. The impurities may comprise high boiling fraction [boiling pont ≥280°C] aliphatic hydrocarbons and/or $C_{12}$ hydrocabons. Water may be present in the unsubstituted branched $C_{13}$ alcohol in amounts ≤1%, ≤0,5%, or ≤0.1 %.

The number of carbon atoms of the alcohol used for preparation of the non-ionic surfactant according to general formula (I) by Fischer glycosidation as indicated above is an average number of carbon atoms, which may be determined by gas chromatography. It is appreciated that the "average number of carbon atoms" includes carbon atoms along the linear carbon chain as well as branching carbons.

In any case, the term "unsubstituted" means that the alcohol and/or corresponding alkyl group is free of substituents, i.e. the alkyl group is composed of carbon and hydrogen atoms only. "Branched" herein means the result of carbon-carbon bonds formed e.g. during the hydroformylation process as described above.

The term "average number of branches" may be used herein to specify the alcohol used for preparation of the non-ionic surfactant according to general formula (I) by Fischer glycosidation and/or to specify the corresponding R in general formula (I) as disclosed herein. Therefore, the "average number of branches" may refer to the average number of branches per alcohol molecule and/or to the average number of branches per alkyl residue, measured by $^{13}C$ Nuclear Magnetic Resonance ($^{13}C$ NMR) as disclosed herein.

The term "branched alcohol" herein means a saturated or unsaturated alcohol having an "average number of branches" of at least 0.7. The "average number of branches" of the alcohol may range from 0.9 to 3.5, from 1.8 to 3.5, or from 2.0 to 2.5.

The term "branched alkyl" herein means a radical of a saturated or unsaturated branched alkyl having an "average number of branches" of at least 0.7. The "average number of branches" of the alkyl may range from 0.9 to 3.5, from 1.8 to 3.5, or from 2.0 to 2.5.

Specifically, the branched $C_{13}$ alkyl may have an average number of branching of at least 0.7, or its average number of branches ranges from 0.9 to 3.5, from 1.8 to 3.5, or from 2.0 to 2.5.

The branches may occur across the total length of the carbon chain of the alcohol used for preparation of the non-ionic surfactant according to general formula (I) by Fischer glycosidation and/or R in general formula (I). The total number of methyl branches may be at least 40% or at least 50%, relative to the total number of branches, as determined by the $^{13}C$ NMR technique as disclosed herein.

The branched alcohol used for preparation of the non-ionic surfactant according to general formula (I) by Fischer glycosidation and/or R in general formula (I) may have a significant number of branches at the $C_2$ and $C_3$ positions.

Specifically, at least 20% or at least 30% of the branches of R may be concentrated at $C_2$ and/or $C_3$ relative to the ether group within the compound according to general formula (I). This percentage includes the overall number of methyl branches determined by the $^{13}C$ NMR technique as disclosed herein within the $C_1$ to the $C_3$ carbon positions of R relative to the ether group within the compound according to general formula (I).

R in the general formula (I) may be characterized by the $^{13}C$ NMR techniques as disclosed herein, as having from 5 to 25% branching or 10 to 20% branching on the $C_2$ carbon position, relative to the ether group within the compound according to general formula (I).

R in the general formula (I) may be characterized by the $^{13}C$ NMR techniques as disclosed herein, as having from 10 to 50% branching or 15 to 30% branching on the $C_3$ carbon position, relative to the ether group within the compound according to general formula (I).

The share of isopropyl terminal type of branches (meaning methyl branches at the second to last carbon position in the carbon chain of R relative to the ether group within the compound according to general formula (I)) comprised in R of the compound according to general formula (I), as determined by the $^{13}C$ NMR technique, may be ≤ 7% or ≤ 5 %.

Determination of branching characteristics of the alcohol used for preparation of the non-ionic surfactant according to general formula (I) by Fischer glycosidation and/or to specify the corresponding R in general formula (I) as disclosed herein includes but is not limited to using three $^{13}C$-NMR techniques. It may be feasible to use various combinations of the said three $^{13}C$-NMR techniques to determine the branching characteristics of the alcohol used for preparation of the non-ionic surfactant according to general formula (I) by Fischer glycosidation and/or to specify the corresponding R in general formula (I) as disclosed herein. The three $^{13}C$-NMR techniques are:

(1) The standard inverse gated technique includes using a 45-degree tip $^{13}C$ pulse and 10 s recycle delay (an organic free radical relaxation agent is added to the solution of the branched alcohol in deuterated chloroform to ensure quantitative results).

(2) To distinguish carbons with an odd number of protons from those bearing an even number of protons, i.e. $CH_3$/CH vs $CH_2$/Cq (Cq refers to a quaternary carbon), the J-Modulated Spin Echo NMR technique (JMSE) may be used, which includes using a 1/J delay of 8 ms (J is the 125 Hz coupling constant between carbon and proton for these alcohols).

(3) To detect quaternary carbon atoms, the quat-only JMSE NMR technique which uses a 1/2J delay of 4 ms and yielding a spectrum that contains signals from quaternary carbons only. Said technique is sensitive enough to detect the presence of $\geq$ 0.3 atom% of quaternary carbon atoms. If differentiating true quaternary carbons from breakthrough protonated carbons is desired, one may additionally run a DEPT-135 NMR sequence, which produces the "opposite" spectrum to that of the quat-only JMSE NMR. Whereas the latter nulls all signals except for quaternary carbons, the DEPT-135 nulls exclusively quaternary carbons. The combination of the two spectra therefore allows spotting of non-quaternary carbons in the quat-only JMSE NMR spectrum.

Fischer glycosidation means the reaction of alcohols as described above with $C_5$ and/or $C_6$ sugars.

Correspondingly, in the general formula (I), $G^1$ is selected from ketose residues and aldose residues, wherein ketose and/or aldose residues have 5 or 6 carbon atoms. For example, $G^1$ is selected from pentose residues and hexose residues. Examples of pentose residues include residues of xylose and arabinose. Examples of hexose residues include glucose.

Ketose residues and aldose residues are originating from monosaccharides used for preparation of the non-ionic surfactant according to general formula (I) by Fischer glycosidation. Said monosaccharides may be synthetic or derived or isolated from natural products, hereinafter in brief referred to as synthetic monosaccharides or natural monosaccharides. Examples of suitable natural monosaccharides include but are not limited to glucose, xylose, arabinose, rhamnose and mixtures of the foregoing. In one embodiment, glucose and/or xylose are used for preparation of the non-ionic surfactant according to general formula (I) by Fischer glycosidation. Monosaccharides may be selected from any of their enantiomers, naturally occurring enantiomers, and naturally occurring mixtures of enantiomers.

Thus, if $G^1$ in the general formula (I) is a pentose residue, the pentose used for preparation of the non-ionic surfactant according to general formula (I) by Fischer glycosidation may be selected from arabinose such as D-arabinose, L-arabinose and mixtures thereof, xylose such as D-xylose, L-xlose and mixtures thereof.

If $G^1$ in the general formula (I) is a hexose residue, the hexose used for preparation of the nonionic surfactant according to general formula (I) by Fischer glycosidation maybe selected from glucose such as D-glucose, L-glucose and mixtures thereof, and mixtures of the hexoses disclosed.

$(G^1)_x$ means that polysaccharides may be formed during Fischer glycosidation. x may also be called "degree of polymerization" (DP) herein. x may range from 1 to 10, from 1.05 to 2.5, or from 1.10 to 1.8. E.g. x may range from 1.2 to 1.5. In the context of the present invention, x refers to average values, and x is not necessarily a whole number.

In an embodiment, the compound of general formula (I) comprises only whole groups of $G^1$. It is preferred to determine x by high temperature gas chromatography (HTGC), e.g. 400°C, in accordance with K. Hill *et al.,* Alkyl Polyglycosides, VCH Weinheim, New York, Basel, Cambridge, Tokyo, 1997, in particular pages 28 ff., or by HPLC. In HPLC methods, x may be determined by the Flory method. If the values obtained by HPLC and HTGC are different, preference is given to the values based on HTGC.

In one embodiment, for preparation of the non-ionic surfactant according to general formula (I) by Fischer glycosidation monosaccharides which are obtained from a fermentative process of a biomass source are used. The biomass source may be selected from the group comprising pine wood, beech wood, wheat straw, corn straw, switchgrass, flax, barley husk, oat husk, bagasse, miscanthus and the like. Thus, it is appreciated that $G^1$ in the general formula (I) may comprise a mixture of monosaccharides with 5 or 6 carbon atoms.

Due to the fact that several $G^1$ residues may occur in one compound according to formula (I), different $G^1$ may be present in one compound according to formula (I):

In one embodiment, for preparation of the non-ionic surfactant according to general formula (I) by Fischer glycosidation D-glucose and/or D-xylose and/or D-arabinose is used. Correspondingly, $G^1$ in the general formula (I) may be at least one D-lucose residue and/or at least one D-xylose residue and/or at least one D-arabinose residue

For preparation of the non-ionic surfactant according to general formula (I) by Fischer glycosidation D-xylose

and/or D-arabinose and/or D-glucose is used. Correspondingly, $G^1$ in the general formula (I) is a xylose residue and/or an arabinose residue and/or a glucose residue

The weight ratio of D-glucose to D-arabinose (glucose [wt.-%]/arabinose [wt.-%]) in said mixture used for preparation of the non-ionic surfactant according to general formula (I) by Fischer glycosidation may be from 220:1 to 1:20, from 200:1 to 1:15, from 190:1 to 1:10, or from 180:1 to 1:8. The weight ratio of D-xylose to D-arabinose (xylose [wt.-%]/arabinose [wt.-%]) in said mixture used for preparation of the non-ionic surfactant according to general formula (I) by Fischer glycosidation may be from 150:1 to 1:20, from 120:1 to 1:15, from 100:1 to 1:10, or from 80:1 to 1:8. The weight ratio of D-glucose to D-xylose (glucose [wt.-%]/xylose [wt.-%]) in said mixture used for preparation of the non-ionic surfactant according to general formula (I) by Fischer glycosidation may be from 150:1 to 1:20, from 120:1 to 1:15, from 100:1 to 1:10, or from 80:1 to 1:8. In one embodiment a sugar mixture containing 66% by weight D-glucose, 33% by weight D-xylose, and 1% by weight D-arabinose is used for Fischer Glycosidation, all relative to the total weight of the sugar mixture.

In one embodiment, a mixture of D-glucose and D-xylose is used for preparation of the nonionic surfactant according to general formula (I) by Fischer glycosidation. The weight ratio of D-glucose to D-xylose (glucose [wt.-%]/xylose [wt.-%]) in said mixture used for preparation of the non-ionic surfactant according to general formula (I) by Fischer glycosidation may be from 20:1 to 1:10, from 10:1 to 1:5, from 5:1 to 1:2 or from 3:1 to 1:1.

In one embodiment, component (a) comprises a mixture of two or more compounds of the general formula (I) differing in R, while $G^1$ and x are the same. If the two or more compounds comprised in component (a) differ in R, R may differ in the number of carbon atoms (i.e. the length) or the kind of branching.

If the two or more compounds of the composition differ in the kind of branching, the two or more compounds may have the same number of carbon atoms, but the branching across the linear carbon chain is different.

At least one compound according to general formula (I) comprised in component (a) may be selected from those provided in Table 1.

Table 1:

| **Example** | **Glucose** | **Xylose** | **Arabinose** | **Alcohol** | **DP** |
|---|---|---|---|---|---|
| | **[m%]** | **[m%]** | **[m%]** | **[name]** | **[n]** |
| iso$C_{13}$-Glucosid | 100 | 0 | 0 | branched $C_{13}$ | 1.45 |
| iso$C_{13}$-Glucosid | 100 | 0 | 0 | branched $C_{13}$ | 1.44 |
| iso$C_{13}$-Xylosid | 0 | 100 | 0 | branched $C_{13}$ | 1.20 |
| iso$C_{13}$-Arabinosid | 0 | 0 | 100 | branched $C_{13}$ | 1.20 |
| iso$C_{13}$-Glycosid | 66 | 33 | 1 | branched $C_{13}$ | 1.20 |
| $C_{12}C_{14}$-Arabinosid | 0 | 0 | 100 | $C_{12}C_{14}$ linear | 1.26 |
| $C_{12}C_{14}$-Xylosid | 0 | 100 | 0 | $C_{12}C_{14}$ linear | 1.20 |
| $C_{12}C_{14}$ -Glucosid | 100 | 0 | 0 | $C_{12}C_{14}$ linear | 1.43 |

**Component (b):**

Laundry formulation of the invention comprise at least one lipase (component (b)). "Lipases", "lipolytic enzyme", "lipid esterase", all refer to an enzyme of EC class 3.1.1 ("carboxylic ester hydrolase"). Lipase means active protein having lipase activity (or lipolytic activity; triacylglycerol lipase, EC 3.1.1.3), cutinase activity (EC 3.1.1.74; enzymes having cutinase activity may be called cutinase herein), sterol esterase activity (EC 3.1.1.13) and/or wax-ester hydrolase activity (EC 3.1.1.50).

The methods for determining lipolytic activity are well-known in the literature (see e.g. Gupta et al. (2003), Biotechnol. Appl. Biochem. 37, p. 63-71). E.g. the lipase activity may be measured by ester bond hydrolysis in the substrate para-nitrophenyl palmitate (pNP-Palmitate, C:16) and releases pNP which is yellow and can be detected at 405 nm.

"Lipolytic activity" means the catalytic effect exerted by a lipase, which may be provided in lipolytic units (LU). For example, 1LU may correspond to the amount of lipase which produces 1 $\mu$mol of titratable fatty acid per minute in a pH stat. under the following conditions: temperature 30°C.; pH=9.0; substrate may be an emulsion of 3.3 wt.% of olive oil and 3.3% gum arabic, in the presence of 13 mmol/l $Ca^{2+}$ and 20 mmol/l NaCl in 5 mmol/l Tris-buffer.

Lipases (component (b)) include those of bacterial or fungal origin. In one aspect of the invention, a suitable lipase (component (b)) is selected from the following: lipases from *Humicola* (synonym *Thermomyces*), e.g. from *H.*

*lanuginosa* (*T. lanuginosus*) as described in EP 258068, EP 305216, WO 92/05249 and WO 2009/109500 or from *H. insolens* as described in WO 96/13580; lipases derived from *Rhizomucor miehei* as described in WO 92/05249; lipase from strains of *Pseudomonas* (some of these now renamed to *Burkholderia*), e.g. from *P. alcaligenes* or *P. pseudoalcaligenes* (EP 218272, WO 94/25578, WO 95/30744, WO 95/35381, WO 96/00292), *P. cepacia* (EP 331376), *P. stutzeri* (GB 1372034), *P. fluorescens, Pseudomonas sp.* strain SD705 (WO 95/06720 and WO 96/27002), *P. wisconsinensis* (WO 96/12012), *Pseudomonas mendocina* (WO 95/14783), *P. glumae* (WO 95/35381, WO 96/00292); lipase from *Streptomyces griseus* (WO 2011/150157) and S. *pristinaespiralis* (WO 2012/137147), GDSL-type *Streptomyces* lipases (WO 2010/065455); lipase from *Thermobifida fusca* as disclosed in WO 2011/084412; lipase from *Geobacillus stearothermophilus* as disclosed in WO 2011/084417; *Bacillus* lipases, e.g. as disclosed in WO 00/60063, lipases from *B. subtilis* as disclosed in Dartois et al. (1992), Biochemica et Biophysica Acta, 1131, 253-360 or WO 2011/084599, *B. stearothermophilus* (JP S64-074992) or *B. pumilus* (WO 91/16422); lipase from *Candida antarctica* as disclosed in WO 94/01541; cutinase from *Pseudomonas mendocina* (US 5389536, WO 88/09367); cutinase from *Magnaporthe grisea* (WO 2010/107560); cutinase from *Fusarum solani pisi* as disclosed in WO 90/09446, WO 00/34450 and WO 01/92502; and cutinase from *Humicola lanuginosa* as disclosed in WO 00/34450 and WO 01/92502.

Suitable lipases (component (b)) also include those referred to as acyltransferases or perhydrolases, e.g. acyltransferases with homology to *Candida antarctica* lipase A (WO 2010/111143), acyltransferase from *Mycobacterium smegmatis* (WO 2005/056782), perhydrolases from the CE7 family (WO 2009/67279), and variants of the *M. smegmatis* perhydrolase in particular the S54V variant (WO 2010/100028).

Suitable lipases (component (b)) include also those which are variants of the above described lipases which have lipolytic activity. Such suitable lipase variants (component (b)) are e.g. those which are developed by methods as disclosed in WO 95/22615, WO 97/04079, WO 97/07202, WO 00/60063, WO 2007/087508, EP 407225 and EP 260105.

Suitable lipases (component (b)) include lipase variants having lipolytic activity which are at least 40%, at least 45%, at least 50%, at least 55%, at least 60%, at least 65%, at least 70%, at least 75%, at least 80%, at least 85%, at least 90%, at least 91%, at least 92%, at least 93%, at least 94%, at least 95%, at least 96%, at least 97%, at least 98% or at least 99% identical when compared to the full length polypeptide sequence of the parent enzyme as disclosed above. Suitable lipases (component (b)) include lipase variants having lipolytic activity which are at least 40%, at least 45%, at least 50%, at least 55%, at least 60%, at least 65%, at least 70%, at least 75%, at least 80%, at least 85%, at least 90%, at least 91%, at least 92%, at least 93%, at least 94%, at least 95%, at least 96%, at least 97%, at least 98% or at least 99% similar when compared to the full length polypeptide sequence of the parent enzyme.

In one embodiment, lipase (component (b)) is selected from fungal triacylglycerol lipase (EC class 3.1.1.3). Suitable fungal triacylglycerol lipases (EC class 3.1.1.3) include but are not limited to the following:

- lipases from *Humicola* (synonym *Thermomyces*), e.g. from *H. lanuginosa (T. lanuginosus*) as described in EP 0548228, EP 1054956, EP 1171581, EP 1693440, EP 2250259, EP 258068, EP 2721137, and EP 305216; or from *H. insolens* as described in WO 96/13580,

- lipases derived from *Rhizomucor miehei* as described in WO 92/05249.

Fungal triacylglycerol lipase (component (b)) may be selected from lipases of *Thermomyces lanuginosa.* In one embodiment, at least one *Thermomyces lanuginosa* lipase (component (b)) is selected from triacylglycerol lipase according to amino acids 1-269 of SEQ ID NO:2 of US 5869438 and variants thereof having lipolytic activity.

*Thermomyces lanuginosa* lipase (component (b)) may be selected from variants having lipolytic activity which are at least 90%, at least 91%, at least 92%, at least 93%, at least 94%, at least 95%, at least 96%, at least 97%, at least 98% or at least 99% identical when compared to the full length polypeptide sequence of amino acids 1-269 of SEQ ID NO:2 of US 5869438. *Thermomyces lanuginosa* lipase (component (b)) may be selected from variants having lipolytic activity comprising conservative mutations only, which do however not pertain the functional domain of amino acids 1-269 of SEQ ID NO:2 of US 5869438. Lipase variants of this embodiment having lipolytic activity may be at least 95%, at least 96%, at least 97%, at least 98% or at least 99% similar when compared to the full length polypeptide sequence of amino acids 1-269 of SEQ ID NO:2 of US 5869438.

At least one *Thermomyces lanuginosa* lipase (component (b)) may be at least 80% identical to SEQ ID NO:2 of US 5869438 characterized by having amino acid T231R and N233R. Said *Thermomyces lanuginosa* lipase may further comprise one or more of the following amino acid exchanges: Q4V, V60S, A150G, L227G, P256K.

In one embodiment, at least one lipase is selected from commercially available lipases which include but are not limited to products sold under the trade names Lipolase™, Lipex™, Lipolex™ and Lipoclean™ (Novozymes A/S), Lumafast (originally from Genencor) and Lipomax (Gist-Brocades/ now DSM).

According to the present invention, a combination of at least two lipases (component (b)) may be used.

### Laundry formulation

The present invention refers to a laundry formulation containing components (a) and (b) as disclosed above and at least one detergent component, wherein components (a) and (b) are present in effective amounts to remove fatty stains deposited on textiles. In one embodiment, the fatty stains to be removed by said laundry formulation are solid, meaning that the fatty compounds comprised in the fatty stains having a melting temperature > 30°C and the laundering temperature is ≤ 30°C.

The laundry formulation of the invention may comprise a component (a) and component (b) in a ratio in the range of 150: 1 to 2500:1. The laundry formulation of the invention may comprise a component (a) and component (b) in the ratio of 2500:1, in the ratio of 1500:1, in the ratio of 1000:1, in the ratio of 750:1, in the ratio of 500:1, in the ratio of 450:1, in the ratio of 300:1, in the ratio of 225:1, or in the ratio of 150:1.

The laundry formulation of the invention comprises one or more detergent component(s). Detergent components vary in type and/or amount in a laundry formulation depending on the desired application such as laundering white textiles, colored textiles, and wool. The component(s) chosen further depend on physical form of a laundry formulation (liquid, solid, gel, provided in pouches or as a tablet, etc). The component(s) chosen further depend on regional conventions which themselves are related to aspects like washing temperatures used, mechanics of laundry machine (vertical vs. horizontal axis machines), water consumption per wash cycle etc. and geographical characteristics like average hardness of water.

The term "detergent component" is defined herein to mean the types of ingredient, which is suitable for laundry formulations, such as surfactants, building agents, polymers, bleaching systems. Any component(s) known in the art acknowledging their known characteristics are suitable detergent component(s) according to the invention.

Detergent components may have more than one function in the final application of a detergent composition, therefore any detergent component mentioned in the context of a specific function herein, may also have another function in the final application of a detergent composition. The function of a specific detergent component in the final application of a detergent composition usually depends on its amount within the detergent composition, i.e. the effective amount of a detergent component.

The term "effective amount of a detergent component" herein includes

- a detergent component's ability to effectively remove stains on a textile to be washed [i.e. the washing performance of the detergent component as such] and/or
- the contribution of a detergent component to a laundry formulation's effectivity in washing [i.e. the washing performance of the laundry formulation].

Preferably, a laundry formulation of the invention comprises one or more detergent components in effective amounts.

Washing performance is evaluated under relevant washing conditions. The term "relevant washing conditions" herein refers to the conditions, particularly washing temperature, time, washing mechanics, suds concentration, type of laundry formulation and water hardness, actually used in laundry machines, or in manual washing processes.

Herein washing performance may mean degreasing performance. Degreasing performance is related to the ability of the laundry formulation to remove fatty stains deposited on textiles. Fatty stains deposited on textiles may be called fatty deposits herein. In one embodiment, fatty deposits comprise fatty compounds having a melting point > 30°C, meaning that such fatty compounds remain solid at laundering temperatures ≤ 30°C. Degreasing performance herein is meant to be improved when removal of fatty stains is improved. Improved in this context may mean that the inventive laundry formulation shows better degreasing performance when compared to non-inventive laundry formulations. The removal of fatty stains may occur due to enzymatic degradation and/or solubilization and/or dispersion and/or emulsifying of the fatty compounds deposited on textile.

The invention relates to the use of component (a) to improve the degreasing performance of lipase containing laundry formulations on textiles at laundering temperatures ≤ 30°C. At least one lipase comprised in the laundry formulation may be selected from at least one fungal triacylglycerol lipase.

The invention relates to the use of a surfactant mixture consisting of component (a) and at least one non-ionic surfactant of the general formulae (IIa) and (IIb) to improve the degreasing performance of lipase containing laundry formulations at a laundering temperature ≤ 30°C, wherein general formulae (IIa) and (IIb) are:

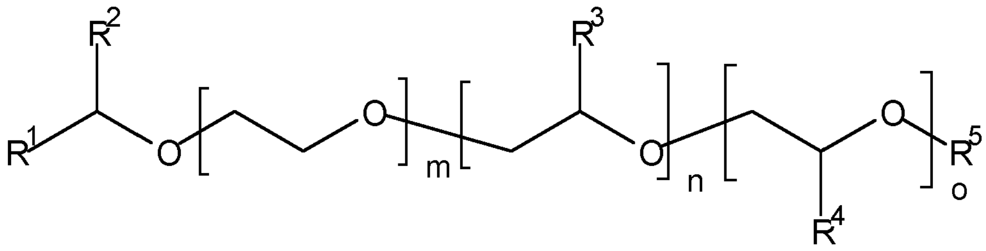

(IIa)

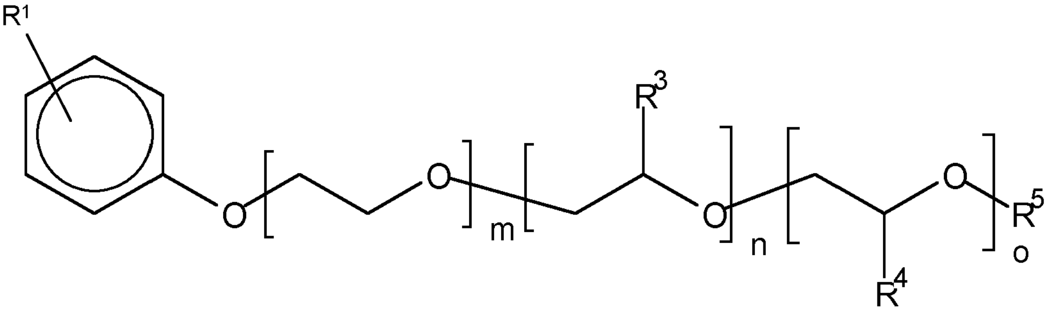

(IIb)

wherein the variables of the general formulae (IIa) and (IIb) are defined as follows:

$R^1$ is selected from $C_6$-$C_{23}$ alkyl and $C_2$-$C_{23}$ alkenyl, wherein alkyl and/or alkenyl are linear or branched.
$R^2$ is selected from H, $C_1$-$C_{20}$ alkyl and $C_2$-$C_{20}$ alkenyl, wherein alkyl and/or alkenyl are linear or branched.
$R^3$ and $R^4$, each independently selected from $C_1$-$C_{16}$ alkyl, wherein alkyl is linear or branched;
examples are methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, isodecyl.
$R^5$ is selected from H and $C_1$-$C_{18}$ alkyl, wherein alkyl is linear or branched.
m is in the range of zero to 80; n is in the range of zero to 10; o is in the range of zero to 50.

The sum of m, n and o is in the range of 5 to 100.

The non-ionic surfactant of general formula (IIa) may be selected from compounds wherein m is in the range of 3 to 11, preferably not more than 7; n and o is 0, $R^1$ is $C_{12}$-$C_{14}$, $R^5$ is H. In one embodiment, at least two non-ionic surfactants of general formula (IIa) may be selected, wherein one non-ionic surfactant may be characterized in $R^1$ being $C_{12}$, $R^5$ being H, m is 7, n and o = 0, and the other non-ionic surfactant may be characterized in $R^1$ being $C_{14}$, $R^5$ being H, m being 7, n and o = 0.

In one embodiment, the lipase containing laundry formulation comprises at least one fungal triacylglycerol lipase (EC class 3.1.1.3).

The surfactant mixture may consist of component (a) and at least one non-ionic surfactant of formula (IIa), wherein the share of component (a) is at least 50% by weight, relative to the total weight of the surfactant mixture. The share of component (a) may be in the range of 50% to 80% by weight, in the range of 50% to 70% by weight, or in the range of 50% to 60% by weight, all relative to the total weight of the surfactant mixture. In one embodiment, the share of component (a) is about 51.2% by weight relative to the total weight of the surfactant mixture. In one embodiment, the share of at least one non-ionic surfactant is about 48.8% by weight relative to the total weight of the surfactant mixture.

If not described otherwise, "% by weight" or "% w/w" is meant to be related to total laundry formulation. In this case "% by weight" or "% w/w" is calculated as follows: concentration of a substance as the weight of that substance divided by the total weight of the composition, multiplied by 100.

The term "about," as used herein, refers to variation in the numerical quantity that can occur, for example, through typical measuring and liquid handling procedures used for making concentrates or use solutions in the real world; through inadvertent error in these procedures; through differences in the manufacture, source, or purity of the ingredients used to make the formulations or carry out the methods; and the like. Whether or not modified by the term "about", the claims include equivalents to the quantities and refer to variation in the numerical quantity that can occur.

The laundry formulation of the invention may contain a total amount of enzyme in the range of 0.01 g/L to 20 g/L, or in the range of 0.1 g/L to 10 g/L. In one embodiment, the laundry formulation contains a total amount of enzyme in the range of 10 ppm to 20,000 ppm, or in the range of 100 ppm to 10,000 ppm. The values provided relate to total

amount of protein in a detergent composition. The laundry formulation may contain fungal triacylglycerol lipase in amounts in the range of 10 ppm to 75 ppm. The laundry formulation is diluted to provide the washing liquor which is used in the actual cleaning process.

Individual detergent components and usage in laundry formulations are known to those skilled in the art. Suitable detergent components include but are not limited to surfactants, builders, polymers, alkaline, bleaching systems, fluorescent whitening agents, suds suppressors and stabilizers, hydrotropes, and corrosion inhibitors. Further examples are described e.g. in "complete Technology Book on Detergents with Formulations (Detergent Cake, Dishwashing Detergents, Liquid & Paste Detergents, Enzyme Detergents, Cleaning Powder & Spray Dried Washing Powder)", Engineers India Research Institute (EIRI), 6th edition (2015). Another reference book for those skilled in the art may be "Detergent Formulations Encyclopedia", Solverchem Publications, 2016.

The numeric ranges recited for the individual detergent components provide amounts comprised in laundry formulations. Such ranges have to be understood to be inclusive of the numbers defining the range and include each integer within the defined range.

Laundry formulations of the invention may comprise at least one non-ionic surfactant in addition to component (a) as described above.

Non-ionic surfactant means a surfactant that contains neither positively nor negatively charged (i.e. ionic) functional groups. In contrast to anionic and cationic surfactants, non-ionic surfactants do not ionize in solution. A laundry formulation of the invention may comprise a total amount of non-ionic surfactants in the range of 0.1% to about 40% by weight, in the range of about 0.2% to about 30% by weight, in the range of about 0.5% to about 25% by weight, in the range of about 1% to about 15% by weight, in the range of about 3% to about 5% by weight, or in the range of about 8% to about 12% by weight, all relative to the total weight of the detergent composition.

Examples provided below for surfactants of any kind are to be understood to be non-limiting. Non-ionic surfactants may be compounds of the general formulae (IIa) and (lib):

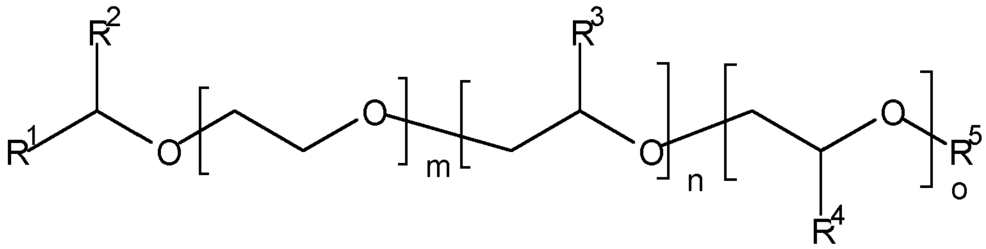

(IIa)

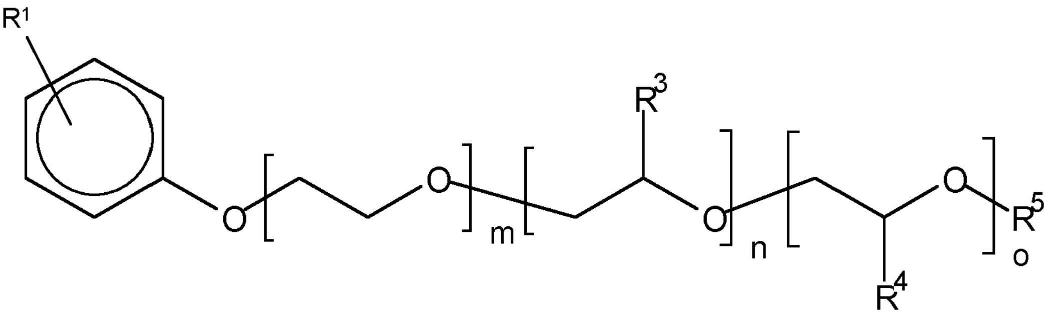

(IIb)

The variables of the general formulae (IIa) and (IIb) are defined as follows:

$R^1$ is selected from $C_6$-$C_{23}$ alkyl and $C_2$-$C_{23}$ alkenyl, wherein alkyl and/or alkenyl are linear or branched; examples are n-$C_7H_{15}$, n-$C_9H_{19}$, n-$C_{11}H_{23}$, n-$C_{13}H_{27}$, n-$C_{15}H_{31}$, n-$C_{17}H_{35}$, i-$C_9H_{19}$, i-$C_{12}H_{25}$.

$R^2$ is selected from H, $C_1$-$C_{20}$ alkyl and $C_2$-$C_{20}$ alkenyl, wherein alkyl and/or alkenyl are linear or branched.

$R^3$ and $R^4$, each independently selected from $C_1$-$C_{16}$ alkyl, wherein alkyl is linear or branched; examples are methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, isodecyl.

$R^5$ is selected from H and $C_1$-$C_{18}$ alkyl, wherein alkyl is linear or branched.

The integers of the general formulae (IIa) and (IIb) are defined as follows:
m is in the range of 1-80, preferably 3-20; n and o, each independently in the range of zero to 100; n preferably is in the

range of 1 to 10, more preferably 1 to 6; o preferably is in the range of 1 to 50, more preferably 4 to 25. The sum of m, n and o is at least one, preferably the sum of m, n and o is in the range of 5 to 100, more preferably in the range of from 9 to 50.

The non-ionic surfactants of the general formulae (IIa) and (IIb) may be of any structure, is it block or random structure, and is not limited to the displayed sequence of formulae (IIa) and (IIb).

In one embodiment, the detergent formulation comprises at least one non-ionic surfactant selected from general formula (Ia), wherein m is in the range of 3 to 11, preferably not more than 7; n and o is 0, $R^1$ is $C_{12}$-$C_{14}$, $R^5$ is H. The detergent formulation may comprise at least two nonionic surfactant, selected from compounds of general formula (Ia), wherein one of said non-ionic surfactants is characterized in $R^1$ being $C_{12}$, $R^5$ being H, m is 7, n and o = 0, and the other surfactant is characterized in $R^1$ being $C_{14}$, $R^5$ being H, m being 7, n and o = 0.

Non-ionic surfactants may further be compounds of the general formula (III), which might be called alkyl-polyglycosides (APG):

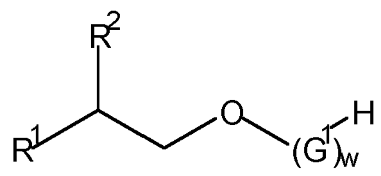

(III)

The variables of the general formula (III) are defined as follows:

$R^1$ is selected from $C_1$-$C_{17}$ alkyl and $C_2$-$C_{17}$ alkenyl, wherein alkyl and/or alkenyl are linear or branched; examples are n-$C_7H_{15}$, n-$C_9H_{19}$, n-$C_{11}H_{23}$, n-$C_{13}H_{27}$, n-$C_{15}H_{31}$, n-$C_{17}H_{35}$, i-$C_9H_{19}$, i-$C_{12}H_{25}$.

$R^2$ is selected from H, $C_1$-$C_{17}$ alkyl and $C_2$-$C_{17}$ alkenyl, wherein alkyl and/or alkenyl are linear or branched.

$G^1$ is selected from monosaccharides with 4 to 6 carbon atoms, such as glucose and xylose. The integer w of the general formula (III) is in the range of from 1.1 to 4, w being an average number.

The compound according to formula (III) may be selected from compound wherein $R^1$ is linear or branched $C_9$ or linear or branched $C_{11}$ and $R^2$ is H and $G^1$ being glucose residue (DP 1.45). Non-ionic surfactants may further be compounds of general formula (IV):

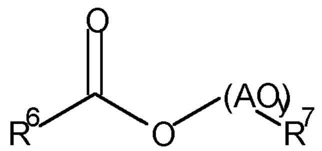

(III)

The variables of the general formula (IV) are defined as follows:

AO is selected from ethylene oxide (EO), propylene oxide (PO), butylene oxide (BO), and mixtures thereof.

$R^6$ is selected from $C_5$-$C_{17}$ alkyl and $C_5$-$C_{17}$ alkenyl, wherein alkyl and/or alkenyl are linear or branched.

$R^7$ is selected from H, $C_1$-$C_{18}$-alkyl, wherein alkyl is linear or branched.

The integer y of the general formula (IV) may be a number in the range of 1 to 70, in the range of 7 to 15, or in the range of 3-12.

Non-ionic surfactants may further be selected from sorbitan esters and/or ethoxylated or propoxylated sorbitan esters. Non-limiting examples are products sold under the trade names SPAN and TWEEN.

Non-ionic surfactants may further be selected from alkoxylated mono- or di-alkylamines, fatty acid monoethanolamides (FAMA), fatty acid diethanolamides (FADA), ethoxylated fatty acid monoethanolamides (EFAM), propoxylated fatty acid monoethanolamides (PFAM), polyhydroxy alkyl fatty acid amides, or N-acyl N-alkyl derivatives of glucosamine (glucamides, GA, or fatty acid glucamide, FAGA), and combinations thereof.

Mixtures of two or more different non-ionic surfactants may also be present in detergent compositions according to the present invention.

The invention relates to the use of components (a) and (b) to replace non-ionic surfactants different from component (a) at least partly, wherein the degreasing performance of the laundry formulation at laundering temperatures ≤ 30°C comprising components (a) and (b) is improved when compared to the degreasing performance of a laundry

formulation comprising a non-ionic surfactant different from component (a) but no component (a). In one embodiment, the degreasing performance is increased towards fatty compounds having a melting temperature > 30°C.

In one embodiment of the invention, components (a) and (b) are used to replace compounds of the general formulae (IIa) and (IIb) at least partly. Compounds of the general formulae (IIa) and (IIb) are those disclosed above. In one embodiment, the compounds to be replaced are selected from those, wherein m is in the range of 3 to 11, preferably not more than 7; n and o is 0, $R^1$ is $C_{12}$-$C_{14}$, $R^5$ is H. In one embodiment, the compounds to be replaced are at least two non-ionic surfactant of general formula (IIa), wherein one of said non-ionic surfactants is characterized in $R^1$ being $C_{12}$, $R^5$ being H, m is 7, n and o = 0, and the other surfactant is characterized in $R^1$ being $C_{14}$, $R^5$ being H, m being 7, n and o = 0.

"Replace at least partly" may mean, that at least about 50% by weight of at least one non-ionic surfactants of formula (IIa) are replaced by component (a), wherein % by weight is relative to the total weight of non-ionic surfactants present in the laundry formulation. "Replace at least partly" may means, that at least one non-ionic surfactants of formula (IIa) is replaced in amounts in the range of 50% to 60% by weight, in the range of 50% to 70% by weight, or in the range of 50% to 80% by weight by component (a), wherein % by weight is relative to the total weight of non-ionic surfactants present in the laundry formulation.

The invention relates to a method of removing fatty stains comprising fatty compounds having a melting temperature > 30°C from textiles, comprising the steps of contacting said fatty stain deposited on textiles with an aqueous solution containing the inventive laundry formulation, wherein contacting occurs at temperatures ≤ 30°C.

The invention relates to the use of component (a) and component (b) as described herein to solubilize and/or to dissolve and/or to disperse fatty compounds having a melting temperature > 30°C at temperatures ≤ 30°C.

The invention relates to a method of reduction of redeposition of fatty compounds onto textile during laundering at temperatures ≤ 30°C by contacting at least one fatty stain deposited on textiles with the inventive laundry formulation during laundering. In one embodiment redeposition is prevented. In one embodiment, the fatty compounds are solid at laundering temperature of ≤ 30°C.

The invention relates to a method of cleaning textiles comprising the steps of contacting a fatty stain deposited on a textile with the inventive laundry formulation at a cleaning temperature ≤ 30°C. In one embodiment, cleaning is done by washing machine.

Laundry formulations of the invention may be liquid laundry formulations. Laundry formulations which are liquid according to the invention, are liquid at 20°C and 101.3 kPa.

The term "liquid" as used herein may relate to formulations that are "pourable" at 20°C and 101.3 kPa. "Pourable" may refers to liquids having a viscosity of < 3,000 mPa*s at 25°C and a shear rate of 20 $sec^{-1}$. For example, a pourable liquid may have a viscosity at 25°C and a shear rate of 20 $sec^{-1}$ in the range of about 200 to about 2,000 mPa*s, in the range of about 200 to about 1,500 mPa*s, or in the range of about 200 to about 1,000 mPa*s.

In one embodiment of the present invention, liquid laundry formulations according to the present invention have a dynamic viscosity in the range of about 500 to about 20,000 mPa*s, determined at 25°C according to Brookfield, for example spindle 3 at 20 rpm with a Brookfield viscosimeter LVT-II.

In the context of the present invention, gel-type laundry formulations are a special embodiment of liquid laundry formulations. Gel-type laundry formulations usually contain at least one viscosity modifier, and they contain little or no non-aqueous solvents. Gel-type laundry formulations can be directly applied to stains in soiled textile.

Gel-type laundry formulations usually are transparent or translucent liquid formulations having a viscosity of > 2,000 mPa*s at 25°C and a shear rate of 20 $sec^{-1}$. For example, the gel-type laundry formulation may have a viscosity at 25°C and a shear rate of 0.1 $sec^{-1}$ in the range of about 2,000 to about 10,000 mPa*s, or in the range of about 5,000 to about 10,000 mPa*s.

In the context of the present invention, paste-type laundry formulations are a special embodiment of gel-type laundry formulations.

Paste-type laundry formulation usually are opaque liquid formulation having a viscosity of greater than 2,000 mPa*s at 25°C and a shear rate of 20 $sec^{-1}$. For example, the paste-type laundry formulation may have a viscosity at 25°C and a shear rate of 0.1 $sec^{-1}$ in the range of about 3,000 to about 10,000 mPa*s, or in the range of about 5,000 to about 10,000 mPa*s.

Liquid laundry formulations according to the present invention may have a water content in the range of 1 to 90% by weight relative to the total weight of the laundry formulation. Liquid laundry formulations may have water content ≤50% by weight, ≤40% by weight, ≤30% by weight, ≤20% by weight, ≤15% by weight, ≤12% by weight, ≤10% by weight, ≤7% by weight, or ≤5% by weight, all relative to the total weight of the laundry formulation.

In one embodiment of the present invention, liquid laundry formulations according to the present invention have a total active content in the range of about 2% to about 90% by weight, in the range of about 10% to about 80% by weight, in the range of 10% to 70%, or in the range of 10% to 60%, all relative to the total weight of the laundry formulation. Total active content in % by weight means:

$$100\% - \text{water content by } \%.$$

The water content by % may be determined by Karl Fischer titration according to DIN EN 13267:2001-06.

In one embodiment of the present invention, liquid laundry formulations according to the present invention comprise solvents other than water (i.e. organic solvent), for example ethanol, n-propanol, iso-propanol, n-butanol, iso-butanol, sec.-butanol, ethylene glycol, propylene glycol, 1,3-propane diol, butane diol, glycerol, diglycol, propyl diglycol, butyl diglycol, hexylene glycol, ethylene glycol methyl ether, ethylene glycol ethyl ether, ethylene glycol propyl ether, and phenoxyethanol, preferred are ethanol, isopropanol or propylene glycol. Liquid laundry formulations according to the present invention may comprise about 0.5% to about 12% by weight of organic solvent relative to the total weight of the liquid laundry formulation.

**Unit-dose products**

The term "laundry formulation" herein includes laundry formulations which may take the form of a unit-dose product, which is a packaging of a single dose in a packaging made of water-soluble material (i.e. films). Such a packaging may be called pouch.

Pouches can be of any form, shape and material which is suitable for holding the laundry formulation, e.g., without allowing the release of the laundry formulation from the pouch prior to water contact. The inner volume of a pouch can be divided into compartments. The compartments of the pouch herein defined are closed structures, made from a water-soluble film which enclose a volume space which comprises different components of a composition. Said volume space is preferably enclosed by a water-soluble film in such a manner that the volume space is separated from the outside environment. The term "outside environment" herein means "anything which cannot pass through the water-soluble film which encloses the compartment and which is not comprised by the compartment". The term "separated" herein means "physically distinct, in that a first ingredient comprised by a compartment is prevented from contacting a second ingredient if said second ingredient is not comprised by the same compartment which comprises said first ingredient".

A water-soluble film (size of samples usually 3.8 cm×3.2 cm locked in a 35mm slide mount) typically has a solubility of at least 50%, at least 75%, or at least 95%, at 20°C within 15 min when exposed to 500 ml distilled water under vigorous stirring (magnetic stirrer, 600 rpm) parallel to water surface. Non-dissolved parts comprised in the mixture can be filtered through a folded qualitative sintered-glass filter with the pore sizes (max. 50 micron). The water can be dried off from the collected filtrate by any conventional method, and the weight of the remaining polymer is determined (which is the dissolved or dispersed fraction). Then, the % solubility can be calculated.

Preferred films are polymeric materials, preferably polymers which are formed into a film or sheet. The film can for example be obtained by casting, coating, blow-moulding, extrusion or blow extrusion of the polymer material, as known in the art. Preferred polymers, copolymers or derivatives thereof are selected from polyvinyl alcohols, polyvinyl pyrrolidone and its water-soluble N-vinylpyrrolidone copolymers, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. More preferably the polymer is selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, most preferably polyvinyl alcohols, polyvinyl alcohol copolymers and hydroxypropyl methyl cellulose (HPMC). Mixtures of polymers can also be used. This may in particular be beneficial to control the mechanical and/or dissolution properties of the compartments or pouch, depending on the application thereof and the required needs. For example, it may be preferred that a mixture of polymers is present in the film, whereby one polymer material has a higher water-solubility than another polymer material, and/or one polymer material has a higher mechanical strength than another polymer material.

The pouch can be prepared according to methods known in the art.

The pouches can comprise a solid laundry formulation according to the invention and/or a liquid laundry formulation according to the invention e.g. in different compartments.

In embodiments in which the liquid laundry formulation of the invention is provided as a unit-dose product or within a compartment of a multi-compartment pouch, the content of organic solvent within the liquid laundry formulation may be in the range of about 8% to about 25% by weight, relative to the total weight of the liquid laundry formulation.

A unit-dose product herein also means a solid laundry formulation provided as e.g. an extruded pellet, or a tablet having a size of between approximately 1 gram and approximately 250 grams, such as e.g. about 30 g to about 125 g, about 30 g to about 100 g such as e.g. about 30 g to about 75 g. Tablets may also be formed by compression of the components of the laundry formulation so that the tablets produced are sufficiently robust to be able to withstand handling and transportation without sustaining damage. In addition to being robust, tablets must also dissolve sufficiently

fast so that the detergent components are released into the wash water as soon as possible at the beginning of the wash cycle.

Solid laundry formulations for unit-dose solid blocks may comprise a solidification matrix. The solidification matrix generally includes an alkali metal hydroxide alkalinity source, a hydratable salt, such as sodium carbonate (soda ash), a polycarboxylic acid polymer and a water charge for forming solid formulations. Furthermore, other excipient compounds may be used in aiding the tableting preparation. Non-limiting examples of suitable compounds include magnesium stearate, magnesium stearyl fumarate, sodium sulphate (anhydrous), magnesium sulphate (anhydrous), sodium carbonate (anhydrous), magnesium carbonate (anhydrous).

The rate of dissolution at certain washing temperatures may vary with the hardness/density of the tablet. In order to have an anti-caking effect, at least one anti-caking agent such as Mgsilicates, Al-silicates, Na-aluminosilicates is present in the composition.

A tablet may comprise one or more polymeric disintegrants, preferably crosslinked disintegrants. A tablet may also comprise one or more disintegration retardants incorporating the cross-linked polymeric disintegrant. Thereby, different phases may be formed which help to control the dissolution of the various phases at different point in times during the cleaning process.

Suitable cross-linked polymeric disintegrants for use herein include cross-linked starches, crosslinked cellulose ethers, cross-linked polyvinylpyrrolidones, preferably the so-called "polyvinlypyrrolidone-popcorn-polymers" or "PVPP", cross-linked carboxy-substituted ethylenicallyunsaturated monomers, cross-linked polystyrene sulphonates and mixtures thereof. Highly preferred are the cross-linked polyvinylpyrrolidones such as PVPP. Suitable cross-linking agents include bi- and multi-functional linking moieties selected from divinyl and diallyl cross-linkers, polyols, polyvinylalcohols, polyalkylenepolymines, ethyleneimine containing polymers, vinylamine containing polymers and mixtures thereof. Alternatively, the popcorn-polymers such as PVPP can be obtained by the so-called proliferous polymerisation (also "popcorn polymerisation") with the use of suitable crosslinking monomers.

The particle size and particle size distribution of the cross-linked polymeric disintegrant is important for controlling both the disintegration performance and the stability of tablets during transport and storage. The polymeric disintegrant may have a particle size distribution such that at least about 40% by weight, at least about 50% by weight, or at least about 55% by weight thereof falls in the range of 250 to 850 microns, with less than about 40%, or less than about 30% greater than 850 microns, such a distribution being preferred from the view point of providing optimum disintegration and stability profiles.

A tablet may comprise one or more non-cross-linked polymeric disintegrants. Preferred non-crosslinked polymeric disintegrants have a particle size distribution such that at least 90% by weight of the disintegrant has a particle size below about 0.3 mm and at least 30% by weight thereof has a particle size below about 0.2 mm. Suitably, the non-crosslinked polymeric disintegrant is selected from starch, cellulose and derivatives thereof, alginates, sugars, swellable clays and mixtures thereof.

In multi-phase tablets, controlled dissolution characteristics can also be achieved by suitable selection of the level (concentration) of disintegration retardant in the various tablet phases.

Thus, according to a further aspect of the invention, there is provided a laundering tablet for use in a laundry machine, the laundering tablet comprising a plurality of compressed phases having differing concentrations of disintegration retardant in at least two of the phases and at least one of which phases comprises a cross-linked polymeric disintegrant such as to provide differential dissolution of the two or more phases in a laundry machine. The disintegration retardant may have a concentration (relative to the corresponding phase) differing by at least about 5%, at least about 20%, or at least about 50% in the at least two phases.

Suitable disintegration retardants herein include but are not limited to organic and other binders, gels, meltable solids, waxes, solubility-triggers (e.g. responsive to pH, ion concentration or temperature), moisture sinks (for example hydratable but anhydrous or partially hydrated salts), viscous or mesophase-forming surfactants, and mixtures thereof. Particularly preferred disintegration retardants herein include amine oxide surfactants, nonionic surfactants, and mixtures thereof. Preferred amine oxide for use herein are tetradecyl dimetyl amine oxide, hexadecyl dimethyl amine oxide and mixtures thereof.

The phase comprising the component (b) of the invention may also comprise component (a) of the invention. Said phase may disintegrate early in the washing process.

## Examples

The degreasing performance of a laundry formulation comprising two or more compounds of general formula (I) and at least one lipase were demonstrated by fat-removal tests (example 1), by using launder-o-meter (example 2, and by using washing machine (example 3). Component (b): Lipase used was a lipase according to SEQ ID NO:2 of US 5869438 characterized by having amino acid T231R and N233R.

Soiled swatches used:

(1) C-S-10[1]: butter fat on cotton

(2) C-S-61[1]: beef fat on cotton; conditioned (removed from sealed package and stored openly at ambient conditions (1013mbar, 23°C, 80% relative humidity) for 24h)

(3) C-S-62[1]: lard on cotton conditioned (removed from sealed package and stored openly at ambient conditions (1013mbar, 23°C, 80% relative humidity) for 24h)

(4) C-S-78[1]: soybean on cotton

The error of each swatch complies the published error analysis in CFT[1] Swatch book Version 5.286.

[1]Producer: Center for Testmaterials (CFT) BV, NL-3130 AC Vlaardingen
[2] Producer: Swissatest Testmaterialien AG, Mövenstrasse 12, CH-9015 St. Gallen

<u>Example 1: fat-removal test</u>

The L*a*b* values of the unwashed soiled swatches (2) were determined by using MACH 5 multi area color measurement (Center for Testmaterials (CFT) BV, NL-3130 AC Vlaardingen).

The unwashed soiled swatches were put into open cylindric stainless steel vessels (ratio height to diameter 2:1 to 1:2) of a size < 2000mL, filling rate <80% containing one of the following type of washing liquor:

(a) water (hardness 2.5 mmol/L; $Ca^{2+}$ : $Mg^{2+}$ : $HCO_3$ = 4:1:8)

(b) water (hardness 2.5 mmol/L; $Ca^{2+}$ : $Mg^{2+}$ : $HCO_3$ = 4:1:8) + component (a) (200 ppm)

(c) water (hardness 2.5 mmol/L; $Ca^{2+}$ : $Mg^{2+}$ : $HCO_3$ = 4:1:8) + component (a) (500 ppm)

Lipase was added were feasible in amounts as indicated in Tables 1a and 1b.

The soiled swatches were shaken in the washing liquor at a fabric/liquor ration of 1:30 to 1:60 on a shaking table device at 375 rpm and at 20°C for 20 min.

Rinse step: After washing the soiled swatches remained in the vessel and are rinsed under continuous tap water (12-21°dH) and a flow rate of 2-6 l/min for < 5 min.

Drying step: The rinsed swatches are dried under continuous air stream and stored in a dark closed room, under ambient condition until they are measured.

The L*a*b* values of the dry swatches were determined by using the MACH5 multi area color measurement. ΔE is calculated between unwashed and washed L*a*b values.

$$\Delta E_{p,v} = \sqrt{(L_p^* - L_v^*)^2 + (a_p^* - a_v^*)^2 + (b_p^* - b_v^*)^2}$$

$(L^*a^*b^*)_v$ = values of unwashed soiled swatches
$(L^*a^*b^*)_p$ = values of swatches after washing test

The results are outlined in following Table Ex1a and Ex1b.

Table Ex1a:

| Washing liquor | Non-ionic surfactant | identifier | Lipase [ppm] | ΔE (2) C-S-61 |
|---|---|---|---|---|
| (a) | - | | 0 | 2.4 |
| (a) | - | | 0.2 | 3.6 |
| (b) | $C_{13}C_{15}$ Oxoalcohol + 7EO | | 0 | 2.6 |
| (b) | $C_{13}C_{15}$ Oxoalcohol + 7EO | | 0.2 | 3.6 |
| (c) | $C_{13}C_{15}$ Oxoalcohol + 7EO | | 0 | 2.6 |

(continued)

| Washing liquor | Non-ionic surfactant | identifier | Lipase [ppm] | ΔE (2) C-S-61 |
|---|---|---|---|---|
| (c) | $C_{13}C_{15}$ Oxoalcohol + 7EO | | 0.2 | 3.1 |
| (b) | $C_{13}C_{15}$ Oxoalcohol + 5EO | | 0 | 3.0 |
| (b) | $C_{13}C_{15}$ Oxoalcohol + 5EO | | 0.2 | 2.0 |
| (c) | $C_{13}C_{15}$ Oxoalcohol + 5EO | | 0 | 2.8 |
| (c) | $C_{13}C_{15}$ Oxoalcohol + 5EO | | 0.2 | 1.4 |
| (b) | iso$C_{13}$-Xylosid | component (a) | 0 | 19.8 |
| (b) | iso$C_{13}$-Xylosid | component (a) | 0.2 | 21.2 |
| (c) | iso$C_{13}$-Xylosid | component (a) | 0 | 25.0 |
| (c) | iso$C_{13}$-Xylosid | component (a) | 0.2 | 27.6 |
| (b) | $C_{12}C_{14}$ Xylosid | | 0 | 12.7 |
| (b) | $C_{12}C_{14}$ Xylosid | | 0.2 | 18.2 |
| (c) | $C_{12}C_{14}$ Xylosid | | 0 | 19.8 |
| (c) | $C_{12}C_{14}$ Xylosid | | 0.2 | 26.0 |
| (b) | iso$C_{13}$-Arabinosid | component (a) | 0 | 15.8 |
| (b) | iso$C_{13}$-Arabinosid | component (a) | 0.2 | 21.7 |
| (c) | iso$C_{13}$-Arabinosid | component (a) | 0 | 25.3 |
| (c) | iso$C_{13}$-Arabinosid | component (a) | 0.2 | 29.7 |
| (b) | $C_{12}C_{14}$ Arabinosid | | 0 | 14.6 |
| (b) | $C_{12}C_{14}$ Arabinosid | | 0.2 | 17.0 |
| (c) | $C_{12}C_{14}$ Arabinosid | | 0 | 22.8 |
| (c) | $C_{12}C_{14}$ Arabinosid | | 0.2 | 25.3 |
| (b) | iso$C_{13}$-Glycosid | component (a) | 0 | 8.9 |
| (b) | iso$C_{13}$-Glycosid | component (a) | 0.2 | 14.2 |
| (c) | iso$C_{13}$-Glycosid | component (a) | 0 | 19.6 |
| (c) | iso$C_{13}$-Glycosid | component (a) | 0.2 | 23.7 |

Table Ex1b:

| Washing liquor | Non-ionic surfactant | identifier | Lipase [ppm] | ΔE (2) C-S-61 |
|---|---|---|---|---|
| (a) | | | 0 | 2.4 |
| (a) | | | 0.2 | 3.6 |
| (a) | | | 1.5 | 4.8 |
| (b) | $C_{13}C_{15}$ Oxoalcohol + 7EO | | 0 | 2.6 |
| (b) | $C_{13}C_{15}$ Oxoalcohol + 7EO | | 0.2 | 3.6 |
| (b) | $C_{13}C_{15}$ Oxoalcohol + 7EO | | 1.5 | 4.7 |
| (b) | $C_{13}C_{15}$ Oxoalcohol + 5EO | | 0 | 3.0 |
| (b) | $C_{13}C_{15}$ Oxoalcohol + 5EO | | 0.2 | 2.0 |
| (b) | $C_{13}C_{15}$ Oxoalcohol + 5EO | | 1.5 | 3.5 |

(continued)

| Washing liquor | Non-ionic surfactant | identifier | Lipase [ppm] | ΔE (2) C-S-61 |
|---|---|---|---|---|
| (b) | iso$C_{13}$-Glycosid | component (a) | 0 | 8.9 |
| (b) | iso$C_{13}$-Glycosid | component (a) | 0.2 | 14.2 |
| (b) | iso$C_{13}$-Glycosid | component (a) | 1.5 | 18.9 |
| (b) | iso$C_{13}$-Glucosid | component (a) | 0 | 11.8 |
| (b) | iso$C_{13}$-Glucosid | component (a) | 0.2 | 15.1 |
| (b) | iso$C_{13}$-Glucosid | component (a) | 1.5 | 18.3 |

Example 2A: Launder-o-meter

The remission value of the unwashed soiled swatches (2) were determined by using spectrophotometer from Fa. Datacolor (Elrepho 2000) at a wavelength of 460 nm.

Two swatches were washed together with ballast fabric, steel balls and water at 20°C in the launder-O-meter (LP2 Typ, SDL Atlas Inc., USA) under the following washing conditions:

| | |
|---|---|
| Water | 250 ml |
| Water hardness | 2.5 mmol/L; $Ca^{2+}$ : $Mg^{2+}$ : $HCO_3$ = 4:1:8 |
| Steel balls* | 20 pieces with 6 mm diameter and 0,9 g |
| Washing time/temperature | 30 min at 20°C |
| Dosage surfactant | 100 ppm and 150 ppm<br>200 ppm and 300 ppm |
| Washing cycles | 1 |
| Water hardness | 2.5 mmol/L; $Ca^{2+}$ : $Mg^{2+}$ : $HCO_3$ = 4:1:8 |
| Ballast fabric | 15 g cotton fabric 283 * |
| Sum ballast fabric + soiled swatches | 20 g |
| Soiled swatches | 2 × 2.5 g of type (2)<br>R [unwashed soiled swatch] = 14.8 |
| Fabric/liquor ratio | 1 : 12.5 |
| * supplier: wfk Testgewebe GmbH, Christenfeld 10, D-41379 Brueggen | |

Rinse step: After washing the soiled swatches were removed and placed in a 10 liter bucket. Under continuous tap water (12-21°dH) flow (2-6 l/min), the soiled swatches were rinsed until no stable foam is formed and visible in the rinse water.

Drying step: The soiled swatches were removed and line dried in a dark closed room under ambient condition for 24h.

The remission values of the dry swatches were determined by using spectrophotometer from Fa. Datacolor (Elrepho 2000) at a wavelength of 460 nm. ΔR was calculated between unwashed and washed remission values.

$$\Delta R = R\ [\text{washed soiled swatch}] - R\ [\text{unwashed soiled swatch}]$$

The results are outlined in Tables Ex2a and Ex2b.

Table Ex2a:

| Non-ionic surfactant | Dosage surfactant [ppm] | identifier | Lipase [ppm] | ΔR (2) C-S-61 |
|---|---|---|---|---|
| $C_{13}C_{15}$ Oxoalcohol + 7EO | 100 | | 0.2 | 10.2 |

(continued)

| Non-ionic surfactant | Dosage surfactant [ppm] | identifier | Lipase [ppm] | ΔR (2) C-S-61 |
|---|---|---|---|---|
| $C_{12}C_{14}$ Glucosid (DP 1.45) | 100 | | 0.2 | 8.9 |
| iso$C_{13}$-Xylosid | 100 | component (a) | 0.2 | 11.6 |
| iso$C_{13}$-Glycosid | 100 | component (a) | 0.2 | 10.4 |
| iso$C_{13}$-Glucosid | 100 | component (a) | 0.2 | 11.7 |
| $C_{13}C_{15}$ Oxoalcohol + 7EO | 150 | | 0.2 | 9.6 |
| $C_{12}C_{14}$ Glucosid (DP 1.45) | 150 | | 0.2 | 11.9 |
| iso$C_{13}$-Xylosid | 150 | component (a) | 0.2 | 13.3 |
| iso$C_{13}$-Glycosid | 150 | component (a) | 0.2 | 12.9 |
| iso$C_{13}$-Glucosid | 150 | component (a) | 0.2 | 12.4 |

Table Ex2b:

| Non-ionic surfactant | Dosage surfactant [ppm] | identifier | Lipase [ppm] | ΔR (2) C-S-61 |
|---|---|---|---|---|
| $C_{13}C_{15}$ Oxoalcohol + 7EO | 200 | | 0.2 | 9.6 |
| iso$C_{13}$-Xylosid | 200 | component (a) | 0.2 | 11.6 |
| iso$C_{13}$-Glycosid | 200 | component (a) | 0.2 | 14.0 |
| iso$C_{13}$-Glucosid | 200 | component (a) | 0.2 | 15.4 |
| $C_{13}C_{15}$ Oxoalcohol + 7EO | 300 | | 0.2 | 9.9 |
| iso$C_{13}$-Xylosid | 300 | component (a) | 0.2 | 17.8 |
| iso$C_{13}$-Glycosid | 300 | component (a) | 0.2 | 12.7 |
| iso$C_{13}$-Glucosid | 300 | component (a) | 0.2 | 15.9 |

Example 2C: Launder-O-meter

Liquid laundry detergent formulations based on various forms of component (a) were tested against reference (water) formulation. The tested formulations were prepared with the listed ingredients (1)-(9) in the described procedure

| | Ingredient | Conc [m%] |
|---|---|---|
| (1) | Maranil DBS/LC (LAS) | 20.5 |
| (2) | Wilfarin DK-1218 ($C_{12}$-$C_{18}$ coco fatty acid) | 10.5 |
| (3) | Non-ionic surfactant /reference as indicated below | 20.5 |
| (4) | Sokalan HP20 (PE! ethoxylated) | 2.4 |
| (5) | Cublen DNC 450 (DTPMP) | 0.3 |
| (6) | Monoethanolamine (MEA) | 8.0 |
| (7) | 1,2 propylene glycol | 19.2 |
| (8) | glycerol | 4.0 |
| (9) | water | add 100 |

Ingredient (7) and (9) are filled into a beaker and heated to 50°C. While stirring with a propeller mixer at 250rpm (6) is slowly added. Thereafter (2) is added and stirred for 1h. Heating is turned off and (3) is added and stirred until clear and homogenous. (5), (1), (4) is added and stirred until homogenous. (8) is added and stirred until clear and

homogenous. The pH value is adjusted by the addition of MEA or Citric acid to 8.5.

Formulation component (3) - non-ionic surfactant /reference:

| | Non-ionic surfactant / Reference | identifier |
|---|---|---|
| (i) | water (reference) | w/o non-ionic surfactant |
| (ii) | $C_{13}C_{15}$-Oxo alcohol + 7 EO | w/o component (a) |
| (iii) | 48.78% $C_{13}C_{15}$-Oxo alcohol + 7 EO + 51.22% iso$C_{13}$-Glucosid, inventive | component (a) included |
| (iv) | 48.78% $C_{13}C_{15}$-Oxo alcohol + 7 EO + 51.22% iso$C_{13}$-Glucosid, inventive | component (a) included |

The L*a*b* values of the unwashed soiled swatches 1), 3) and 5) were determined by using MACH5 multi area color measurement (Center for Testmaterials (CFT) BV, NL-3130 AC Vlaardingen).

Washing step: One of each soiled swatches (1), (3) and (5) were washed together with ballast fabric and steel balls and water at 25°C in the launder-O-meter (LP2 Typ, SDL Atlas Inc., USA) under the following washing conditions:

| | |
|---|---|
| Water | 250 ml |
| Water hardness | 2.5 mmol/L; $Ca^{2+}$ : $Mg^{2+}$ : $HCO_3$ = 4:1:8 |
| Steel balls* | 20 pieces with 6 mm diameter and 0,9 g |
| Washing time/temperature | 30 min at 25°C |
| Washing cycles | 1 |
| Ballast fabric | 2,5 g cotton fabric 283* + 15 g PN33° fabric |
| Sum ballast fabric + soiled swatches | 20 g |
| Soiled swatches | 1 x 5cmx5cm of each 1) C-S-10, 3) C-S-62 and 5) C-S-78 |
| Fabric/liquor ratio | 1 : 12.5 |
| Dosage liquid laundry detergent | 1.7 g/L |
| * supplier: wfk Testgewebe GmbH, Christenfeld 10, D-41379 Brueggen<br>◦ knitted polyester, supplier: CFT | |

Rinse step: After washing the soiled swatches were removed and placed in a 10 liter bucket. Under continuous tap water (12-21°dH) flow (2-6 l/min), the soiled swatches were rinsed until no stable foam was formed and visible in the rinse water.

Drying Step: The soiled swatches were removed and line dried in a dark closed room under ambient condition for 24h.

The L*a*b* values of the dry swatches were determined by using the MACH5 multi area color measurement. ΔE was calculated between unwashed and washed L*a*b values.

$$\Delta E_{\mathrm{p,v}} = \sqrt{(L_{\mathrm{p}}^{*} - L_{\mathrm{v}}^{*})^2 + (a_{\mathrm{p}}^{*} - a_{\mathrm{v}}^{*})^2 + (b_{\mathrm{p}}^{*} - b_{\mathrm{v}}^{*})^2}$$

$(L^*a^*b^*)_v$ = values of unwashed soiled swatches

$(L^*a^*b^*)_p$ = values of swatches after washing test

From the ΔE of (ii)-(iv) the ΔE value of the reference (i) were subtracted.

$$\Delta\Delta E_{(1);(3);(5)} = \Delta E(\text{ii-iv})_{(1);(3);(5)} - \Delta E(\text{i})_{(1);(3);(5)}$$

Thereafter the $\Delta\Delta E_{(1);(3);(5)}$ of the different swatches were summed up.

$$\sum\Delta\Delta E = \Delta\Delta E_{(1)} + \Delta\Delta E_{(2)} + \Delta\Delta E_{(3)}$$

The results are outlined in Tables Ex2c - Ex2f.

Table Ex2c: ΔE of Reference formulation without lipase

| Formulation containing component (3) as indicated below - Reference Formulation | | Lipase [ppm] | ΔE (1) C-S-10 | ΔE (3) C-S-62 | ΔE (5) C-S-78 |
|---|---|---|---|---|---|
| (i) | water (reference) | 0 | 25.2 | 28.7 | 11.3 |

Table Ex2d: ΔΔE and of formulation (ii-iv) without lipase

| Formulation containing component (3) as indicated below | | Lipase [ppm] | ΔΔE (1) C-S-10 | ΔΔE (3) C-S-62 | ΔΔE (5) C-S-78 | ΣΔΔE |
|---|---|---|---|---|---|---|
| (ii) | $C_{13}C_{15}$-Oxo alcohol + 7 EO | 0 | 0.8 | -0.5 | 0.6 | 1.0 |
| (iii) | 48.78% Lutensol AO7 + 51.22% iso$C_{13}$-Glucosid | 0 | 1.2 | 1.4 | 0.7 | 3.3 |
| (iv) | 48.78% Lutensol AO7 + 51.22% iso$C_{13}$-Glycosid | 0 | 1.1 | 1.8 | 0.6 | 3.5 |

Table Ex2e: ΔE of Reference formulation with lipase added

| Reference Formulation | | Lipase [ppm] | ΔE (1) C-S-10 | ΔE (3) C-S-62 | ΔE (5) C-S-78 |
|---|---|---|---|---|---|
| (i) | water (reference) | 0.2 | 26.3 | 28.4 | 10.9 |

Table Ex2f: ΔΔE and of formulation (ii-iv) with lipase added

| Formulation | | Lipase [ppm] | ΔΔE (1) C-S-10 | ΔΔE (3) C-S-62 | ΔΔE (5) C-S-78 | ΣΔΔE |
|---|---|---|---|---|---|---|
| (ii) | $C_{13}C_{15}$-Oxo alcohol + 7 EO | 0.2 | -1.7 | 1.6 | 1.4 | 1.3 |
| (iii) | 48.78% Lutensol AO7 + 51.22% TDN Glucosid | 0.2 | 2.1 | 2.7 | 1.9 | 6.7 |

## Claims

**1.** Liquid laundry formulation comprising

component (a): at least one compound of the general formula (I)

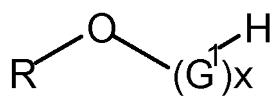

(I)

wherein the variables in general formula (I) are as follows:

R is unsubstituted branched $C_{13}$ alkyl,
$G^1$ is selected from xylose, arabinose, glucose, and mixtures thereof;
x is in the range of from 1 to 10 and refers to average values; and

component (b): at least one lipase.

2. Laundry formulation according to any of the preceding claims, wherein at least one lipase comprised in component (b) is selected from fungal triacylglycerol lipases (EC class 3.1.1.3).

3. Use of components (a) and (b) as described in any of the preceding claims to replace compounds of the general formulae (IIa) and (IIb) at least partly in lipase containing laundry formulations, wherein general formulae (IIa) and (IIb) are:

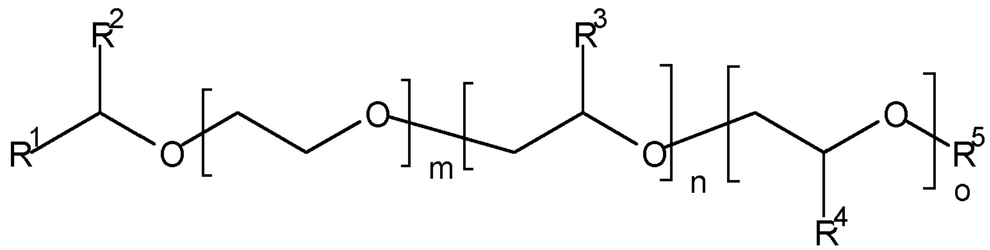

(IIa)

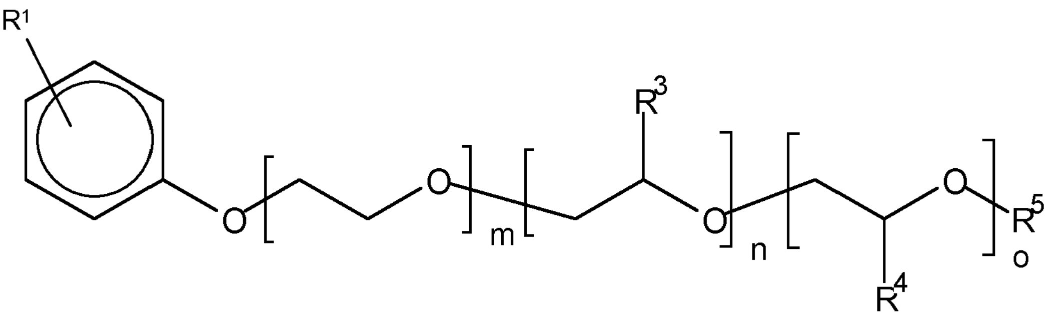

(IIb)

wherein the variables of the general formulae (IIa) and (IIb) are defined as follows:

$R^1$ is selected from $C_6$-$C_{23}$ alkyl and $C_2$-$C_{23}$ alkenyl, wherein alkyl and/or alkenyl are linear or branched.
$R^2$ is selected from H, $C_1$-$C_{20}$ alkyl and $C_2$-$C_{20}$ alkenyl, wherein alkyl and/or alkenyl are linear or branched.
$R^3$ and $R^4$, each independently selected from $C_1$-$C_{16}$ alkyl, wherein alkyl is linear or branched; examples are methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, iso-decyl.
$R^5$ is selected from H and $C_1$-$C_{18}$ alkyl, wherein alkyl is linear or branched.
m is in the range of zero to 80; n is in the range of zero to 10; o is in the range of zero to 50. The sum of m, n and o is in the range of 5 to 100; and
wherein the replacement results in increased degreasing performance at a laundering temperature ≤ 30°C.

4. Use of at least one compound of the general formula (I) to improve the degreasing performance of laundry formulations comprising at least one lipase on textiles at laundering temperatures ≤ 30°C, wherein formula (I) is

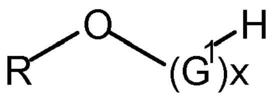

(I)

and wherein the variables in general formula (I) are defined as follows:

R is unsubstituted branched $C_{13}$ alkyl,
$G^1$ is selected from xylose, arabinose, glucose, and mixtures thereof;
x is in the range of from 1 to 10 and refers to average values.

**5.** Use according to claim 4, wherein the degreasing performance towards fatty deposits comprising fatty compounds having a melting temperature > 30°C is increased.

**6.** Use of a surfactant mixture consisting of component (a) as described in claim 1 and at least one compound of the general formulae (IIa) and (IIb) to increase the degreasing performance of lipase containing laundry formulations at a laundering temperature ≤ 30°C, wherein general formulae (IIa) and (IIb) are:

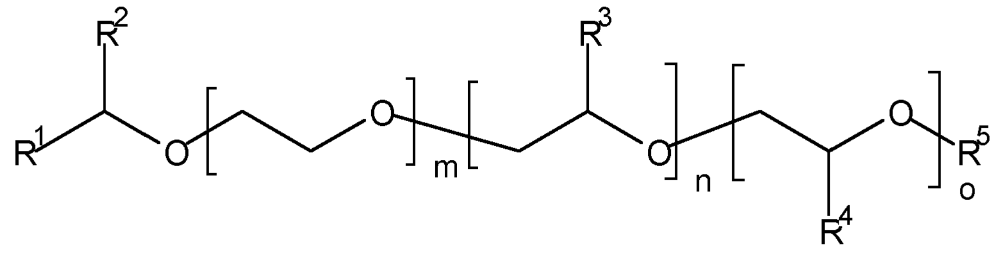

(IIa)

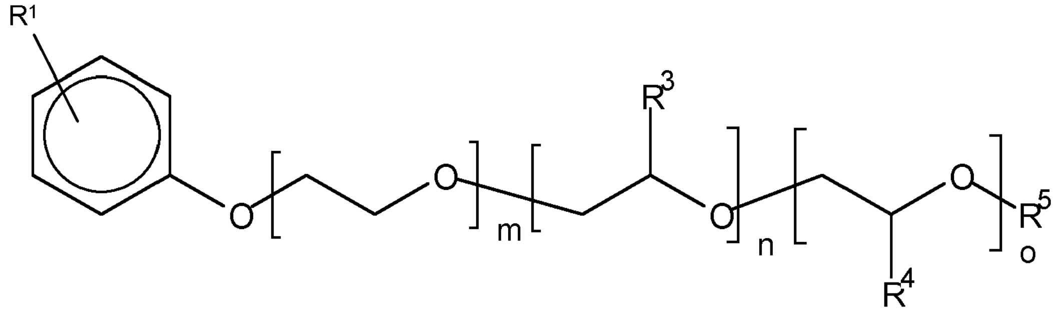

(IIb)

wherein the variables of the general formulae (IIa) and (IIb) are defined as follows:

$R^1$ is selected from $C_6$-$C_{23}$ alkyl and $C_2$-$C_{23}$ alkenyl, wherein alkyl and/or alkenyl are linear or branched.
$R^2$ is selected from H, $C_1$-$C_{20}$ alkyl and $C_2$-$C_{20}$ alkenyl, wherein alkyl and/or alkenyl are linear or branched.
$R^3$ and $R^4$, each independently selected from $C_1$-$C_{16}$ alkyl, wherein alkyl is linear or branched; examples are methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, iso-decyl.
$R^5$ is selected from H and $C_1$-$C_{18}$ alkyl, wherein alkyl is linear or branched.
m is in the range of zero to 80; n is in the range of zero to 10; o is in the range of zero to 50. The sum of m, n and o is in the range of 5 to 100.

**7.** Use according to claim 6, wherein the degreasing performance of laundry formulations comprising at least one fungal triacylglycerol lipase is improved.

**8.** Use of at least one fungal triacylglycerol lipase (EC class 3.1.1.3), to improve degreasing performance of laundry formulations at laundering temperatures ≤ 30°C, wherein the laundry formulation comprises at least one compound of the general formula (I)

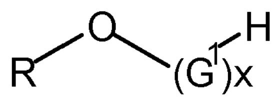

(I)

and wherein the variables in general formula (I) are as follows:

R is unsubstituted branched $C_{13}$ alkyl,
$G^1$ is selected from xylose, arabinose, glucose, and mixtures thereof;

x is in the range of from 1 to 10 and refers to average values.

**9.** Method of removing fatty deposits comprising fatty compounds having a melting temperature > 30°C from textiles, comprising the steps of contacting at least one fatty compound having a melting temperature > 30°C deposited on textiles with a laundry formulation according to claims 1 to 2, wherein contacting occurs at temperatures ≤ 30°C.

**10.** Use of component (a) and component (b) as described in claims 1 to 2 to solubilize and/or dissolve and/or disperse solid fatty compounds at temperatures ≤ 30°C.

**11.** Method to reduce redeposition of fatty compounds onto textile during laundering at temperatures ≤ 30°C comprising the steps of contacting at least one fatty compound having a melting temperature > 30°C available in washing liquor with a laundry formulation according to claims 1 to 2.

**12.** Method of cleaning textiles comprising the steps of contacting a fatty compound deposited on a textile with a laundry formulation according to claims 1 to 2 at a cleaning temperatures ≤ 30°C.

**13.** Method according to claim 12, wherein cleaning is done by washing machine.

## Patentansprüche

**1.** Flüssigwaschmittelformulierung, umfassend

Komponente (a): mindestens eine Verbindung der allgemeinen Formel (I)

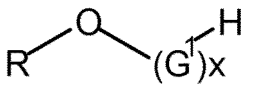

(I)

wobei die Variablen in der allgemeinen Formel (I) wie folgt definiert sind:

R ist unsubstituiertes verzweigtes $C_{13}$-Alkyl,
$G^1$ ist aus Xylose, Arabinose, Glucose und Mischungen davon ausgewählt,
x liegt im Bereich von 1 bis 10 und bezieht sich auf Durchschnittswerte;

und
Komponente (b): mindestens eine Lipase.

**2.** Waschmittelformulierung nach einem der vorhergehenden Ansprüche, wobei die mindestens eine Lipase, die in Komponente (b) enthalten ist, aus pilzlichen Triacylglycerinlipasen (EC-Klasse 3.1.1.3) ausgewählt ist.

**3.** Verwendung von Komponenten (a) und (b) gemäß einem der vorhergehenden Ansprüche zum zumindest teilweisen Ersatz von Verbindungen der allgemeinen Formeln (IIa) und (IIb) in lipasehaltigen Waschmittelformulierungen, wobei die allgemeinen Formeln (IIa) und (lib) wie folgt lauten:

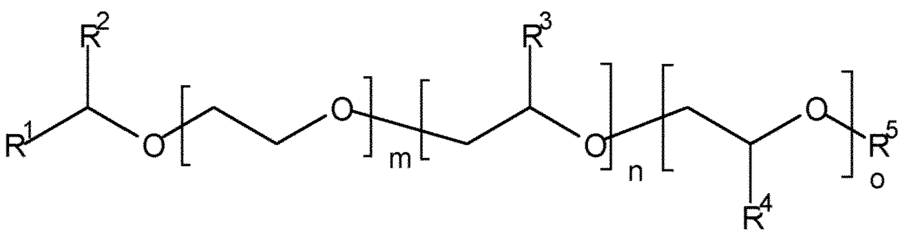

(IIa)

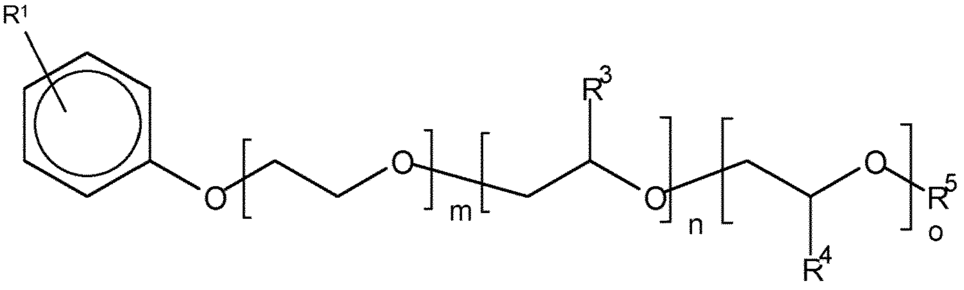

(IIb)

wobei die Variablen der allgemeinen Formeln (IIa) und (IIb) wie folgt definiert sind:

$R^1$ ist aus $C_6$-$C_{23}$-Alkyl und $C_2$-$C_{23}$-Alkenyl ausgewählt, wobei Alkyl und/oder Alkenyl linear oder verzweigt sind,
$R^2$ ist aus H, $C_1$-$C_{20}$-Alkyl und $C_2$-$C_{20}$-Alkenyl ausgewählt, wobei Alkyl und/oder Alkenyl linear oder verzweigt sind,
$R^3$ und $R^4$ sind jeweils unabhängig aus $C_1$-$C_{16}$-Alkyl ausgewählt, wobei Alkyl linear oder verzweigt ist; Beispiele sind Methyl, Ethyl, n-Propyl, Isopropyl, n-Butyl, Isobutyl, sec-Butyl, tert-Butyl, n-Pentyl, Isopentyl, sec-Pentyl, Neopentyl, 1,2-Dimethylpropyl, Isoamyl, n-Hexyl, Isohexyl, sec-Hexyl, n-Heptyl, n-Octyl, 2-Ethylhexyl, n-Nonyl, n-Decyl, Isodecyl,
$R^5$ ist aus H und $C_1$-$C_{18}$-Alkyl ausgewählt, wobei Alkyl linear oder verzweigt ist,
m liegt im Bereich von null bis 80; n liegt im Bereich von null bis 10; o liegt im Bereich von null bis 50; die Summe von m, n und o liegt im Bereich von 5 bis 100; und
wobei der Ersatz zu einer erhöhten Entfettungsleistung bei einer Waschtemperatur $\leq 30$ °C führt.

**4.** Verwendung mindestens einer Verbindung der allgemeinen Formel (I) zur Verbesserung der Entfettungsleistung von Waschmittelformulierungen, die mindestens eine Lipase umfassen, auf Textilien bei Waschtemperaturen $\leq 30$ °C, wobei Formel (I) wie folgt lautet:

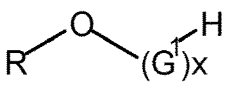

(I)

und wobei die Variablen in der allgemeinen Formel (I) wie folgt definiert sind:

R ist unsubstituiertes verzweigtes $C_{13}$-Alkyl,
$G^1$ ist aus Xylose, Arabinose, Glucose und Mischungen davon ausgewählt,
x liegt im Bereich von 1 bis 10 und bezieht sich auf Durchschnittswerte.

**5.** Verwendung nach Anspruch 4, wobei die Entfettungsleistung gegenüber fettigen Ablagerungen, die Fettverbindungen mit einer Schmelztemperatur > 30 °C umfassen, verbessert wird.

**6.** Verwendung einer Tensidmischung, bestehend aus Komponente (a) gemäß Anspruch 1 und mindestens einer Verbindung der allgemeinen Formeln (IIa) und (IIb) zur Erhöhung der Entfettungsleistung von lipasehaltigen Waschmittelformulierungen bei einer Mischtemperatur $\leq 30$ °C, wobei die allgemeinen Formeln (IIa) und (IIb) wie folgt lauten:

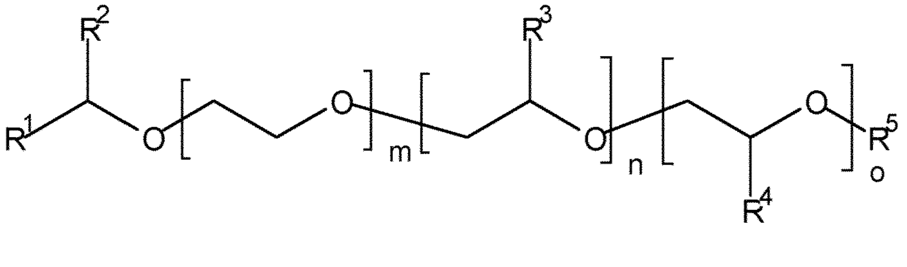

(IIa)

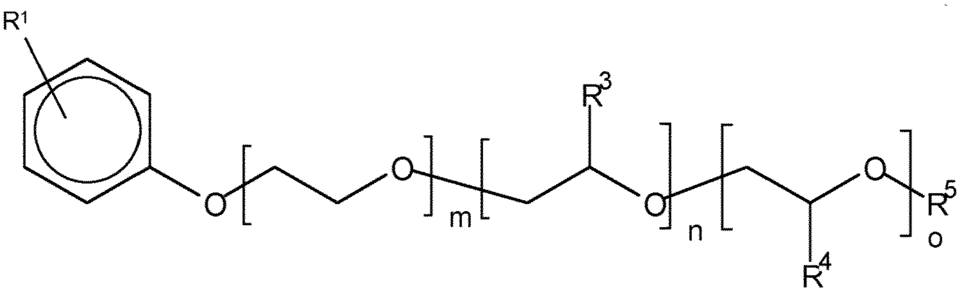

(IIb)

wobei die Variablen der allgemeinen Formeln (IIa) und (IIb) wie folgt definiert sind:

$R^1$ ist aus $C_6$-$C_{23}$-Alkyl und $C_2$-$C_{23}$-Alkenyl ausgewählt, wobei Alkyl und/oder Alkenyl linear oder verzweigt sind,
$R^2$ ist aus H, $C_1$-$C_{20}$-Alkyl und $C_1$-$C_{20}$-Alkenyl ausgewählt, wobei Alkyl und/oder Alkenyl linear oder verzweigt sind,
$R^3$ und $R^4$ sind jeweils unabhängig aus $C_1$-$C_{16}$-Alkyl ausgewählt, wobei Alkyl linear oder verzweigt ist; Beispiele sind Methyl, Ethyl, n-Propyl, Isopropyl, n-Butyl, Isobutyl, sec-Butyl, tert-Butyl, n-Pentyl, Isopentyl, sec-Pentyl, Neopentyl, 1,2-Dimethylpropyl, Isoamyl, n-Hexyl, Isohexyl, sec-Hexyl, n-Heptyl, n-Octyl, 2-Ethylhexyl, n-Nonyl, n-Decyl, Isodecyl,
$R^5$ ist aus H und $C_1$-$C_{18}$-Alkyl ausgewählt, wobei Alkyl linear oder verzweigt ist,
m liegt im Bereich von null bis 80; n liegt im Bereich von null bis 10; o liegt im Bereich von null bis 50; die Summe von m, n und o liegt im Bereich von 5 bis 100.

**7.** Verbindung nach Anspruch 6, wobei die Entfettungsleistung von Waschmittelformulierungen, die mindestens eine pilzliche Triacylglycerinlipase umfassen, verbessert wird.

**8.** Verwendung mindestens einer pilzlichen Triacylglycerinlipase (EC-Klasse 3.1.1.3) zur Verbesserung der Entfettungsleistung von Waschmittelformulierungen bei Waschtemperaturen ≤ 30 °C, wobei die Waschmittelformulierung mindestens eine Verbindung der allgemeinen Formel (I)

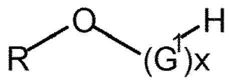

(I)

umfasst und wobei die Variablen in der allgemeinen Formel (I) wie folgt definiert sind:

R ist unsubstituiertes verzweigtes $C_{13}$-Alkyl,
$G^1$ ist aus Xylose, Arabinose, Glucose und Mischungen davon ausgewählt,
x liegt im Bereich von 1 bis 10 und bezieht sich auf Durchschnittswerte.

**9.** Verfahren zur Entfernung von fettigen Ablagerungen, die Fettverbindungen mit einer Schmelztemperatur > 30 °C umfassen, von Textilien, umfassend die Schritte des Inkontaktbringens mindestens einer auf Textilien abgeschiedenen Fettverbindung mit einer Schmelztemperatur > 30 °C mit einer Waschmittelformulierung nach den Ansprüchen 1 bis 2, wobei das Inkontaktbringen bei Temperaturen ≤ 30 °C erfolgt.

**10.** Verwendung von Komponente (a) und Komponente (b) gemäß den Ansprüchen 1 bis 2 zum Solubilisieren und/oder Lösen und/oder Dispergieren von festen Fettverbindungen bei Temperaturen ≤ 30 °C.

**11.** Verfahren zur Verringerung der Wiederabscheidung von Fettverbindungen auf Textilien beim Waschen bei Temperaturen ≤ 30 °C, umfassend die Schritte des Inkontaktbringens mindestens einer Fettverbindung mit einer Schmelztemperatur > 30 °C, die in einer Waschflotte verfügbar ist, mit einer Waschmittelformulierung nach den Ansprüchen 1 bis 2.

**12.** Verfahren zum Reinigen von Textilien, umfassend die Schritte des Inkontaktbringens einer auf einer Textilie abgeschiedenen Fettverbindung mit einer Waschmittelformulierung nach den Ansprüchen 1 bis 2 bei einer Reinigungstemperatur von ≤ 30 °C.

**13.** Verfahren nach Anspruch 12, wobei das Reinigen mittels Waschmaschine erfolgt.

**Revendications**

**1.** Formulation de lessive liquide comprenant

composant (a) : au moins un composé de la formule générale (I)

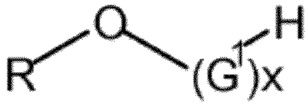

(I)

les variables dans la formule générale (I) étant définies comme suit :

R est alkyle en $C_{13}$ ramifié non substitué,
$G^1$ est choisi parmi xylose, arabinose, glucose, et des mélanges correspondants ;
x est dans la plage allant de 1 à 10 et fait référence à des valeurs moyennes ;

et
composant (b) : au moins une lipase.

**2.** Formulation de lessive selon l'une quelconque des revendications précédentes, l'au moins une lipase comprise dans le composant (b) étant choisie parmi des triacylglycérol lipases fongiques (classe EC 3.1.1.3).

**3.** Utilisation de composants (a) et (b) tels que décrits dans l'une quelconque des revendications précédentes pour remplacer des composés des formules générales (IIa) et (IIb) au moins partiellement dans des formulations de lessive contenant une lipase, les formules générales (IIa) et (IIb) étant :

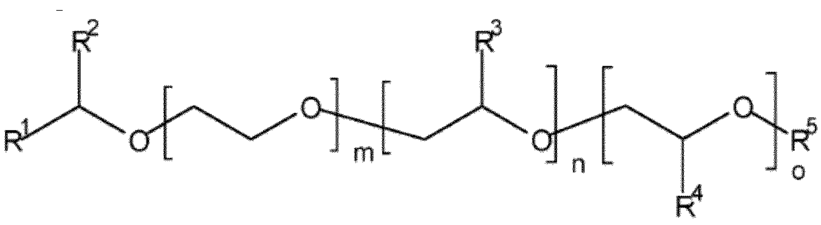

(IIa)

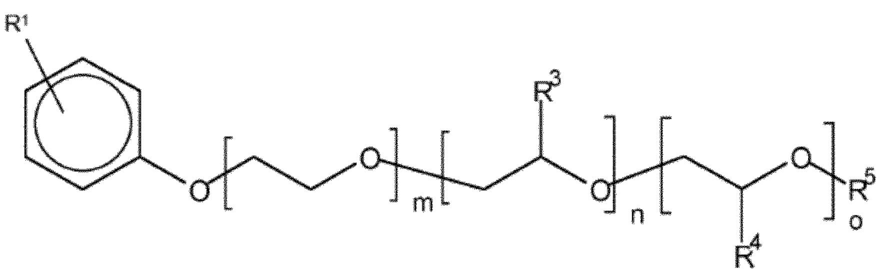

(IIb)

les variables des formules générales (IIa) et (IIb) étant définies comme suit :

$R^1$ est choisi parmi $C_6$-$C_{23}$ alkyle et $C_2$-$C_{23}$ alcényle, alkyle et/ou alcényle étant linéaires ou ramifiés, $R^2$ est choisi parmi H, $C_1$-$C_{20}$ alkyle et $C_2$-$C_{20}$ alcényle, alkyle et/ou alcényle étant linéaires ou ramifiés,
$R^3$ et $R^4$ sont chacun indépendamment choisis parmi $C_1$-$C_{16}$ alkyle, alkyle étant linéaire ou ramifié ; des exemples étant méthyle, éthyle, n-propyle, isopropyle, n-butyle, isobutyle, sec-butyle, tertbutyle, n-pentyle, isopentyle,

sec-pentyle, néopentyle, 1,2-diméthylpropyle, isoamyle, n-hexyle, iso-hexyle, sec-hexyle, n-heptyle, n-octyle, 2-éthylhexyle, n-nonyle, n-décyle, isodécyle,
$R^5$ est choisi parmi H et $C_1$-$C_{18}$ alkyle, alkyle étant linéaire ou ramifié,
m est dans la plage de zéro à 80 ; n est dans la plage de zéro à 10 ; o est dans la plage de zéro à 50, la somme de m, n et o étant dans la plage de 5 à 100 ; et
le remplacement entraînant une performance de dégraissage augmentée à une température de lessivage ≤ 30°C.

**4.** Utilisation d'au moins un composé de la formule générale (I) pour améliorer la performance de dégraissage de formulations de lessive comprenant au moins une lipase sur des textiles à des températures de lessivage ≤ 30°C, la formule (I) étant

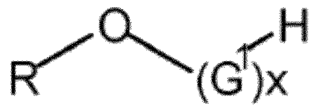

(I)

et les variables dans la formule générale (I) étant définies comme suit :

R est alkyle en $C_{13}$ ramifié non substitué,
$G^1$ est choisi parmi xylose, arabinose, glucose, et
des mélanges correspondants ;
x est dans la plage allant de 1 à 10 et fait référence à des valeurs moyennes.

**5.** Utilisation selon la revendication 4, la performance de dégraissage envers des dépôts graisseux comprenant des composés graisseux ayant une température de fusion > 30 °C étant augmentée.

**6.** Utilisation d'un mélange de tensioactifs constitué du composant (a) tel que décrit dans la revendication 1 et d'au moins un composé des formules générales (IIa) et (IIb) pour augmenter la performance de dégraissage de formulations de lessive contenant une lipase à une température de lessivage ≤ 30 °C,
les formules générales (IIa) et (IIb) étant :

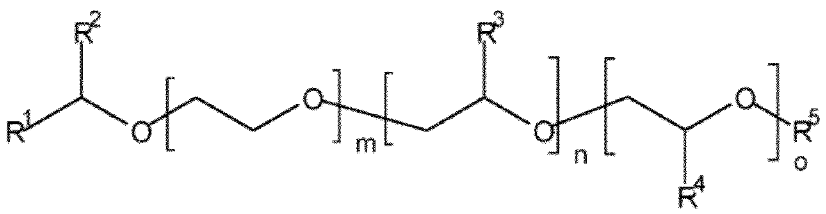

(IIa)

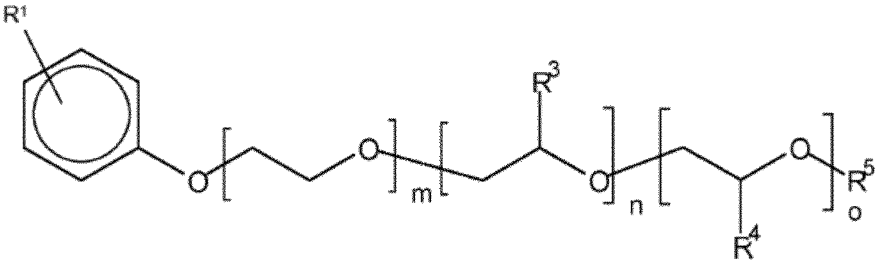

(IIb)

les variables des formules générales (IIa) et (IIb) étant définies comme suit :

$R^1$ est choisi parmi $C_6$-$C_{23}$ alkyle et $C_2$-$C_{23}$ alcényle, alkyle et/ou alcényle étant linéaires ou ramifiés, $R^2$ est choisi parmi H, $C_1$-$C_{20}$ alkyle et $C_2$-$C_{20}$ alcényle, alkyle et/ou alcényle étant linéaires ou ramifiés,
$R^3$ et $R^4$ sont chacun indépendamment choisis parmi $C_1$-$C_{16}$ alkyle, alkyle étant linéaire ou ramifié ; des exemples étant méthyle, éthyle, n-propyle, isopropyle, n-butyle, isobutyle, sec-butyle, tertbutyle, n-pentyle, isopentyle,

sec-pentyle, néopentyle, 1,2-diméthylpropyle, isoamyle, n-hexyle, iso-hexyle, sec-hexyle, n-heptyle, n-octyle, 2-éthylhexyle, n-nonyle, n-décyle, isodécyle,
$R^5$ est choisi parmi H et $C_1$-$C_{18}$ alkyle, alkyle étant linéaire ou ramifié,
m est dans la plage de zéro à 80 ; n est dans la plage de zéro à 10 ; o est dans la plage de zéro à 50, la somme de m, n et o étant dans la plage de 5 à 100.

**7.** Utilisation selon la revendication 6, la performance de dégraissage de formulations de lessive comprenant au moins une triacylglycérol lipase fongique étant améliorée.

**8.** Utilisation d'au moins une triacylglycérol lipase fongique (classe EC 3.1.1.3), pour améliorer la performance de dégraissage de formulations de lessive à des températures de lessivage ≤ 30 °C, la formulation de lessive comprenant au moins un composé de la formule générale (I)

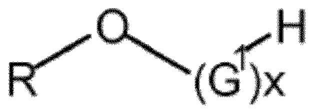

(I)

et les variables dans la formule générale (I) étant définies comme suit :

R est alkyle en $C_{13}$ ramifié non substitué,
$G^1$ est choisi parmi xylose, arabinose, glucose, et des mélanges correspondants ;
x est dans la plage allant de 1 à 10 et fait référence à des valeurs moyennes.

**9.** Procédé d'élimination de dépôts graisseux comprenant des composés graisseux ayant une température de fusion > 30 °C de textiles, comprenant les étapes de mise en contact d'au moins un composé graisseux ayant une température de fusion > 30 °C déposé sur des textiles avec une formulation de lessive selon les revendications 1 à 2, la mise en contact ayant lieu à des températures ≤ 30 °C.

**10.** Utilisation du composant (a) et du composant (b) tels que décrits dans les revendications 1 à 2 pour solubiliser et/ou dissoudre et/ou disperser des composés graisseux solides à des températures ≤ 30 °C.

**11.** Procédé de réduction de la redéposition de composés graisseux sur un textile pendant un lessivage à des températures ≤ 30 °C comprenant les étapes de mise en contact d'au moins un composé graisseux ayant une température de fusion > 30 °C disponible dans une liqueur de lavage avec une formulation de lessive selon les revendications 1 à 2.

**12.** Procédé de nettoyage de textiles comprenant les étapes de mise en contact d'un composé graisseux déposé sur un textile avec une formulation de lessive selon les revendications 1 à 2 à une température de nettoyage ≤ 30 °C.

**13.** Procédé selon la revendication 12, le nettoyage étant réalisé par une machine à laver.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 201178949 A
- DE 4315854
- WO 0136356 A
- EP 258068 A
- EP 305216 A
- WO 9205249 A
- WO 2009109500 A
- WO 9613580 A
- EP 218272 A
- WO 9425578 A
- WO 9530744 A
- WO 9535381 A
- WO 9600292 A
- EP 331376 A
- GB 1372034 A
- WO 9506720 A
- WO 9627002 A
- WO 9612012 A
- WO 9514783 A
- WO 2011150157 A
- WO 2012137147 A
- WO 2010065455 A
- WO 2011084412 A
- WO 2011084417 A
- WO 0060063 A
- WO 2011084599 A
- JP S64074992 B
- WO 9116422 A
- WO 9401541 A
- US 5389536 A
- WO 8809367 A
- WO 2010107560 A
- WO 9009446 A
- WO 0034450 A
- WO 0192502 A
- WO 2010111143 A
- WO 2005056782 A
- WO 200967279 A
- WO 2010100028 A
- WO 9522615 A
- WO 9704079 A
- WO 9707202 A
- WO 2007087508 A
- EP 407225 A
- EP 260105 A
- EP 0548228 A
- EP 1054956 A
- EP 1171581 A
- EP 1693440 A
- EP 2250259 A
- EP 2721137 A
- US 5869438 A


### Non-patent literature cited in the description


- **GUPTA et al.** *Biotechnol. Appl. Biochem,* 2003, vol. 37, 63-71
- **DARTOIS et al.** *Biochemica et Biophysica Acta,* 1992, vol. 1131, 253-360
- Detergent Cake, Dishwashing Detergents, Liquid & Paste Detergents, Enzyme Detergents, Cleaning Powder & Spray Dried Washing Powder. complete Technology Book on Detergents with Formulations. Engineers India Research Institute (EIRI), 2015
- Detergent Formulations Encyclopedia. Solverchem Publications, 2016